(19) Europäisches Patentamt
European Patent Office
Office européen des brevets

(11) **EP 2 835 395 B1**

(12) **EUROPÄISCHE PATENTSCHRIFT**

(45) Veröffentlichungstag und Bekanntmachung des Hinweises auf die Patenterteilung:
**22.05.2019 Patentblatt 2019/21**

(51) Int Cl.:
*F16L 55/165* (2006.01)   *B32B 27/08* (2006.01)
*B32B 27/32* (2006.01)

(21) Anmeldenummer: **14180540.8**

(22) Anmeldetag: **11.08.2014**

(54) **Anordnung mit ein oder zwei Folien, inbesondere zum Eisatz in der grabenlosen Kanalsanierung**

Arrangement with one or two foils, in particular for use in a trenchless sewer rehabilitation

Dispositif avec un ou deux Feuilles, notamment à être utilisée dans l'assainissement de canaux sans tranchée

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.08.2013 DE 102013108680**

(43) Veröffentlichungstag der Anmeldung:
**11.02.2015 Patentblatt 2015/07**

(73) Patentinhaber: **Buergofol GmbH**
**93354 Siegenburg (DE)**

(72) Erfinder:
• **Schleicher, Franz**
**85053 Ingolstadt (DE)**
• **Boutrid, Abdel-Kader**
**93345 Siegenburg (DE)**
• **Stark, Kurt**
**91284 Neuhaus a.d. Pegnitz (DE)**

(74) Vertreter: **Schlief, Thomas P.**
**Canzler & Bergmeier**
**Patentanwälte Partnerschaft mbB**
**Friedrich-Ebert-Straße 84**
**85055 Ingolstadt (DE)**

(56) Entgegenhaltungen:
**WO-A1-99/11966     DE-A1-102011 105 995**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Anordnung mit einer oder zwei Folien und mit einer Harzschicht auf einer der beiden Seiten der besagten Folie oder unmittelbar zwischen zwei besagten Folien, insbesondere zum Einsatz in der grabenlosen Kanalsanierung mittels Schlauchlining-Verfahren.

Die Anwendungsbereiche von Folien erweitern sich ständig. Zu den Einsatzgebieten gehört auch das Schlauchlining-Verfahren für die grabenlose Kanalrohrsanierung. Hierbei weist ein Schlauchliner (auch Einlegeschlauch oder nur Liner genannt) beim System Glasfaser-Schlauchliner mit UV- oder Dampfhärtung üblicherweise einen inneren und einen äußeren Schlauch auf, zwischen denen ein für Harz saugfähiges Trägermaterial, beispielsweise ein Glasfasergewebe, Filz, Vlies, Textilmaterial, eingebracht ist, welches mit reaktivem Kunststoffharz getränkt ist. Als reaktives Kunststoffharz kommen zum Beispiel handelsübliche UP-Harze (Polyester- bzw. ungesättigte Polyesterharze), VE-Harze (Vinylesterharze) oder EP-Harze (Epoxid-Harze) zum Einsatz. Die Härtung der Harze erfolgt bei UP- oder VE-Harzen zum Beispiel mit Hilfe von Photoinitiatoren. Die Härtung kann aber auch thermisch durchgeführt werden.

Der Einlegeschlauch bzw. Schlauchliner wird im Rohr bis zum Anliegen an eine Außenwand aufgeblasen, um anschließend das Harz - beispielsweise mittels UV-Licht einer langsam durch das Rohr gezogenen UV-Lichtquelle - auszuhärten. Zum Schluss wird die innere Folie des Einlegeschlauchs abgezogen und entfernt. Die Schicht mit dem Trägermaterial ist dann den durch das Rohr zu leitenden Substanzen exponiert.

In der WO 99/11966 A1 ist ein Preliner offenbart, bei dem ein nicht-gewebter Faserstoff bzw. ein Vlies auf eine Barrierefolie aufkaschiert ist. Das Vlies wird dann mit Harz imprägniert, so dass insgesamt eine Abdichtungsbarriere für ein entsprechend renoviertes Abwasserrohr erhalten wird.

In der DE 10 2011 105 995 A1 ist beschrieben, dass funktionelle Gruppen eine chemische Reaktion mit dem Faserschlauch eingehen und insbesondere mit dem photochemisch härtbaren Harz.

Es ist Aufgabe der vorliegenden Erfindung, eine Anordnung mit einer oder zwei Folien zur Verfügung zu stellen, welche insbesondere eine Vereinfachung des Schlauchlining-Verfahrens ermöglicht. Eine solche Anordnung soll möglichst auch in anderen Bereichen einsetzbar sein.

Diese Aufgabe wird durch die Anordnung gemäß Anspruch 1 gelöst.

Die erfindungsgemäße Anordnung ist für den dauerhaften Auftrag von Harz ausgebildet bzw. ermöglicht eine dauerhafte Verbindung mit dem Harz. Die eine Folie bzw. beide Folien der erfindungsgemäßen Anordnung weisen hierzu mindestens eine Schicht auf, welche mindestens ein Polyolefin-Plastomer (POP) enthält (im Folgenden wird der Einfachheit zumeist von einer Folie gesprochen; es ist hiermit auch der Fall einer erfindungsgemäßen Anordnung mit zwei solchen Folien abgedeckt). Hierdurch wird es ermöglicht, dass das Harz im Zuge der bzw. nach der Harzaushärtung direkt, d.h. unmittelbar, auf der besagten Folie haftet. Es hat sich herausgestellt, dass mittels einer solchen Folie bei der grabenlosen Kanalsanierung überraschenderweise auf das üblicherweise zur Verbindung der Folie mit Harz verwendete Nonwoven (etwa ein Vlies), das dazu auf die Folie aufkaschiert wird, vollständig verzichtet werden kann. So kann das mit Harz samt dem mit dem Harz getränkten Trägermaterial (zum Beispiel Glasfasergewebe), das bei dem Schlauchlining-Verfahren wegen der Festigkeit nach Harzhärtung zwingend erforderlich ist, nun direkt mit der erfindungsgemäßen Folie in Kontakt gebracht werden, wobei nach Harzhärtung eine feste Verbindung von Folie und Harz (inkl. Trägermaterial) erreicht werden kann. Auf ein für Harz saugfähiges Material auf der Folie, insbesondere ein Vlies, das vorher auf die Folie aufkaschiert wird, kann somit verzichtet werden, was sowohl den Aufwand als auch die Kosten reduziert. Außerdem gibt es keine Probleme mehr mit der Anbindung des (nicht mehr vorhandenen) Vlieses mit der Folie.

Im Unterschied zum Stand der Technik verbindet sich das Harz gemäß der Erfindung also unmittelbar und dauerhaft mit der besagten Schicht der erfindungsgemäßen Folie. Die Folie muss nicht mehr - wie gemäß dem Stand der Technik - vorher mit einem für Harz saugfähigen Material wie beispielsweise einem Vlies, kaschiert oder verbunden sein, um eine Harzanbindung zu erreichen. Zwar kann sich die Folie vorteilhafterweise auch mit dem Trägermaterial an sich, das mit Harz getränkt wird, verbinden. Wesentlich bei der vorliegenden Erfindung ist aber die generelle Verbindung der Folie direkt mit dem Harz. So würde sich die erfindungsgemäße Folie also auch mit reinem Harz verbinden, wie die nachfolgenden Beispiele zeigen.

Polyolefin-Plastomere (POP) sind Spezialformen von Polyolefinen, wodurch sich diese Produktklassen von den üblichen Polyolefinen differenzieren.

Die erfindungsgemäß in der Schicht zur Harzhaftung eingesetzten Polyolefin-Plastomere (POP) sind im Wesentlichen niederdichte lineare Polyethylene mit sehr niedriger Molmasse (LLDPE-VLMW - linear low density Polyethylene - very low molecular mass), d.h. mit einer niedrigen molekularen Gewichtsverteilung von ungefähr 2.0. Sie wurden ursprünglich zur Verbesserung der elastischen Eigenschaften von Verpackungsfolien entwickelt. Mittlerweile werden diese elastischen Polyethylene auch bei weniger anspruchsvollen Spritzgussteilen eingesetzt, um Kautschuk kostengünstig zu substituieren. Auch in geschäumten Produkten werden POP eingesetzt.

Unter einem Plastomer versteht man ein Polymer-Material, das die Eigenschaften von Elastomeren und Kunststoffen miteinander verbindet, wie beispielsweise gummiartige Eigenschaften mit der Verarbeitbarkeit von Kunststoffen.

Polyolefin-Plastomere sind aufgebaut aus Ethylen- und weiteren alpha-Olefin-Bausteinen. Sie unterscheiden sich von anderen homogenen Polymeren darin, dass sie lange Kettenzweige (long chain branching, LCB) aufweisen, was die Verarbeitbarkeit verbessert. Sie weisen im Allgemeinen eine niedrige molekulare Gewichtsverteilung von ungefähr 2,0 auf und besitzen üblicherweise eine Dichte von unterhalb 0,910 g/cm$^3$. Sie können mit *"single-site"*-Katalysatoren (auch bisweilen als *"constraint geometry catalysts"* bezeichnet) oder Ziegler-Natta-Katalysatoren hergestellt werden. Unter Polyolefin-Plastomeren (POP) werden insbesondere Metallocen-katalysierte Polymere mit den oben genannten Eigenschaften verstanden.

Typischerweise sind POP Co-Polymere aus Ethylen und Octen, oder Ethylen und Hexen, oder Ethylen und Buten, oder Ethylen und Propylen. Insbesondere sind viele der aktuell zum Einsatz kommenden Polyolefin-Plastomere im Wesentlichen lineare Ethylen-Octen-Copolymere. Polyolefin-Plastomere können transparent oder opak sein. Sie sind generell geeignet für Anwendungen mit hoher Flexibilität, Weichheit oder Zähigkeit.

Die Firma The Dow Chemical Company bietet beispielsweise unter den Markennamen AFFINITY Polyolefin-Plastomere, unter den Markennamen Affinity GA und ENGAGE Polyolefin-Elastomere und unter dem Markennamen VERSIFY Plastomere und Elastomere an. Diese Produkte werden mit der INSITE®-Technologie von Dow hergestellt, die spezielle Metallocen-Katalysatoren einsetzen.

Eine Methode zur Abgrenzung von Polyolefin-Plastomeren gegenüber anderen Polymeren (außer der Ermittlung der Dichte, s.o.) kann mittels der "Dart-Drop"-Methode, gemessen nach ASTM D 1709 / ISO 7765-1, durchgeführt werden. Mit diesem Verfahren sollen die Unterschiede von signifikant unterschiedlichen Sprödheiten bzw. dynamischen Durchstoßfestigkeiten ermittelt werden. Hierbei wird ein Gewicht ("Dart") aus einer definierten Höhe auf eine faltenfrei und fest eingespannte Folie fallen gelassen. Wenn das Gewicht die Folie nicht durchschlägt, wird das nächste, schwerere Gewicht gewählt. In einer Versuchsserie (Serie von 20-25 Fallversuchen wird dasjenige Gewicht ermittelt, bei dem bei 50% der Falltests die Folie durchstoßen wird und die andere Hälfte gerade noch nicht durchstößt.

Die zwei durchgeführten unterschiedlichen Methoden heißen Methode A und Methode B. Sie unterscheiden sich in der Größe des Gewichts und der Fallhöhe des Gewichts. Bei der Methode A weist das Gewicht einen Durchmesser von 38 mm auf, wobei eine Fallhöhe von 0,66 m gewählt wird. Bei der Methode B betragen der Durchmesser des Gewichts 51 mm und die Fallhöhe 1,5 m.

Die folgenden AFFINITY-Produkte (POP) von The Dow Chemical Group weisen beispielsweise folgenden Eigenschaften auf (angegeben sind auch die verwendeten Messstandards D1238, D792 und D1709):

|  | "melt index" (g/10 min) D1238 | Dichte (g/cm$^3$) D792 | Filmdicke (μm) | Dart Impact (g) D1709 Methode B |
|---|---|---|---|---|
| AFFINITY PF 1140 | 1,6 | 0,897 | 51 | > 850 |
| AFFINITY PL 1840 | 1,0 | 0,909 | 51 | > 830 |
| AFFINITY PL 1850 | 3,0 | 0,902 | 20 | > 830 |
| AFFINITY PL 1880 | 1,0 | 0,902 | 51 | > 830 |
| AFFINITY PL 1881 | 1,0 | 0,904 | 51 | > 830 |

Das POP in der POP enthaltenden Schicht der erfindungsgemäßen Folie erfüllt vorzugsweise mindestens eines der obigen Kriterien, bevorzugt alle, d.h. einen Schmelzflussindex (melt index) von 1,0 bis 3,0 g/10 min - oder breiter gefasst zwischen 0,5 und 4 g/ 10 min - nach D1238, eine Dichte zwischen 0,897 und 0,904 g/cm$^3$ nach D792 und einen Dart Impact (Methode B nach D1709) von mehr als 830 g. Auch POP-Verbindungen mit geringfügigen Unter- und Überschreitungen dieser Werte sind vorzugsweise mit eingeschlossen.

Verschiedene Hersteller bieten unterschiedliche Polyolefin-Plastomere an. Die Firma Borealis beispielsweise vertreibt unter dem Markennamen Exact® verschiedene Polyolefin-Plastomere in Form von Alpha-Olefin-Copolymeren, die mit Hilfe von Metallocen-Katalysatoren hergestellt werden. Eine neue Serie von Exact®-Plastomeren verwendet Ethylen-Buten (EB) als Co-Monomer.

Die erfindungsgemäße Anordnung kann in verschiedenen Bereichen der grabenlosen Kanalsanierung eingesetzt werden. Die möglichen Einsatzgebiete sind sowohl das Inversieren des Schlauchliners als auch dessen Einziehen, sowie die thermische Härtung wie auch die Härtung mittels UV-Strahlung der Harze des Schlauchliners (mit Vlies-freien Folien). Demgemäß umfasst die Erfindung auch einen Schlauchliner mit mindestens einer erfindungsgemäßen Anordnung.

Beim Einsatz in der grabenlosen Kanalsanierung wird eine erfindungsgemäße Folie der erfindungsgemäßen Anordnung mit einer zu Harz haftenden Schicht bevorzugt als Außenfolie, Preliner-Folie und/oder Schlauchinnenfolie eingesetzt. Hierbei ist die Schicht mit POP zum Harz gerichtet, wobei das Harz bevorzugt mit einem Trägermaterial wie z.B. Glasfasern - durch Tränkung des Trägermaterials - in das Kanalrohr eingebracht wird. Der Schritt der Tränkung mit Harz sowie das in Kontaktbringen mit der erfindungsgemäßen Folie erfolgt entweder beim Schlauchliner-Hersteller, was häufig die bevorzugte Variante ist, oder direkt auf der Baustelle. Danach wird der Schlauchliner in den Kanal gezogen oder hinein invertiert. Im Zuge der exothermen Harzreaktion (d.h. wenn das Harz härtet) entsteht Wärme, im Bereich ca. 70 bis 140°C, bevorzugt 100 bis 130°C. Diese Wärme aktiviert dann die Schicht mit dem POP, wobei sich nach Abkühlung dann eine feste Verbindung mit dem Harz ergibt. Unterstützt werden kann dieser Vorgang durch eine Oberflächenbehandlung der das POP enthaltenden Schicht.

Prinzipiell ist also die Vorbereitung zum Einbau des Schlauchliners wie im Stand der Technik. Der Unterschied liegt darin, dass sich nun auf der Baustelle, d.h. beim Einsatz des Liners, die entsprechenden aktivierten Folienschichten mit dem Harz auf dem jeweiligen Träger verbinden, wenn dieses ausgehärtet wird, da sich bei der Harzhärtung eine höhere Temperatur einstellt.

Gemäß einer bevorzugten Anwendung wird die Folie als Schlauchinnenfolie verwendet, wobei die für die Auftragung des Harzes vorgesehene Folienseite näher an der Kanalrohrachse und die aufzutragende Harzschicht näher an der Kanalrohrwand angeordnet ist. Hierbei bleibt die Schlauchinnenfolie nach dem Aushärten des Harzes im Kanal. Um eine Aushärtung des Harzes von der Kanalinnenseite her, z.B. durch Hindurchziehen eines UV-Strahlers, zu ermöglichen, ist die Schlauchinnenfolie vorteilhafterweise zumindest teilweise für UV-Strahlung durchlässig, vorzugsweise zu wenigstens 20%, besonders bevorzugt zu wenigstens 50% und am meisten bevorzugt zu wenigstens 70%. Unter dem Begriff "UV-Strahlung" wird im Rahmen dieser Erfindung elektromagnetische Strahlung in einem Wellenlängenbereich von 200 bis 400 nm verstanden.

Gemäß einer bevorzugten alternativen Ausführungsform ist eine erfindungsgemäße Folie der erfindungsgemäßen Anordnung als Außen- oder Schlauchaußenfolie ausgebildet, wobei die für die Auftragung des Harzes bzw. Verbindung mit dem Harz vorgesehene Folienseite näher an der Kanalrohrwand und das aufzutragende Harz näher an der Kanalrohrachse angeordnet ist, und wobei die Schlauchaußenfolie vorteilhafterweise UV-Strahlung absorbiert und/oder reflektiert. Hierdurch wird die vorzeitige Härtung des Harzes durch Tages- oder Kunstlicht bei der Lagerung des Schlauchliners verhindert. Der Schlauchliner kann für Lagerung und Transport in eine Kiste gefaltet oder aufgewickelt werden.

Gemäß einer vorteilhaften Ausführungsform sind sowohl die Schlauchinnenfolie als auch die Schlauchaußenfolie als erfindungsgemäße Folie der erfindungsgemäßen Anordnung ausgebildet. Diese weisen also jeweils eine Schicht mit mindestens einem POP auf, wobei sich die jeweilige Schicht direkt und fest mit dem Harz verbindet, wenn dieses ausgehärtet ist.

Bei einer bevorzugten Ausführungsform der erfindungsgemäßen Anordnung ist eine erfindungsgemäße Folie als innere Außenfolie ausgebildet, welche bevorzugt als Flachfolie vorliegt. Der Aufbau des Schlauchliners ist demnach wie folgt: a) Schlauchinnenfolie (kann erfindungsgemäß ausgebildet sein), b) Träger/Harz, c) Harz-haftende innere Außenfolie (erfindungsgemäß ausgebildet), d) UV- und lichtdichte äußere Außenfolie. Hierbei wird die erfindungsgemäß ausgebildete innere Außenfolie (z.B. in Streifenform mit einer Breite ca. 50 bis 400 mm) um den getränkten "Halb-Liner", d.h. Schlauchinnenfolie und Träger/Harz, spiralförmig herum gewickelt. Besonders wichtig ist es dabei, dass die Umwicklung absolut dicht ist, d.h. es dürfen keine Monomere oder Chemikalien austreten. Dazu ist einerseits die sehr gute Haftung der erfindungsgemäßen inneren Außenfolie erforderlich, andererseits muss diese Folie aber in den sich überlappenden Bereichen mit sich selbst haften und verbinden.

Die Verbindung der Folie zum Harz einerseits als auch der einen Folienseite zur anderen andererseits (bei der in Längsrichtung "verschobener" bzw. auseinander gezogener bzw. spiralförmiger Wicklung mit Ränderüberlappung) wird besonders bevorzugt durch thermische Aktivierung, im Zuge der exothermen Aushärtung des Harzes, erreicht. Es treten hierbei üblicherweise Temperaturen von ca. 65°C bis 130°C auf. Da bei dieser Ausführungsform der erfindungsgemäßen Folie sich diese an der Außenseite des Harzes befindet, und das Harz durch eine UV-Quelle von innen her, üblicherweise mittels einer durch das Rohr- und Schlauchlinerinnere hindurch gezogenen UV-Quelle, gehärtet wird, ist die Temperatur in diesem äußeren Bereich geringer und bewegt sich um 65°C bis 90°C. Auch bei diesen niedrigeren Temperaturen muss einerseits eine Anbindung der Folie an das Harz erfolgen, sowie andererseits die Verbindung der Folie in den überlappenden Bereichen mit sich selbst. Vorzugsweise verbinden sich die beiden Seiten der erfindungsgemäßen Folie daher bei Temperaturen zwischen 50°C und 130°C und besonders bevorzugt zwischen 65°C und 90°C. Dies kann vorteilhafterweise dadurch erreicht werden, dass die nicht mit dem Harz in Kontakt kommende Außenschicht der erfindungsgemäßen Außenfolie einen Schmelzpunkt im Bereich von 50°C bis 130°C, bevorzugt zwischen 65°C und 90°C, besitzt.

Dies wird erreicht, indem der Schmelzpunkt der anderen Folienseite, die nicht zum Harz zeigt, ebenfalls abgesenkt wird. Gemäß einer bevorzugten Ausführungsform wird hierzu EVAc (Ethylen-Vinylacetat Copolymer) in diejenige Außenschicht der erfindungsgemäßen inneren Außenfolie zugegeben, die der POP enthaltenden Schicht abgewandt ist. Beim längs versetzten, spiralförmigen Wickeln dieser inneren Außenfolie um die Harzschicht herum verbindet sich diese EVAc enthaltende Außenschicht in den Überlappungsbereichen mit der das POP enthaltenden Außenschicht auf thermischem Wege. Es resultiert eine vollständige Dichtheit des Schlauchliners, die zusätzlich auch zu einer besseren Stabilität beiträgt.

Generell können zur Absenkung des Schmelzpunktes der besagten, der Harz-haftenden Schicht abgewandten, Außenschicht der erfindungsgemäßen Folie, vorzugsweise auf einen Schmelzpunkt zwischen 50°C und 130°C, besonders bevorzugt zwischen 65°C und 100°C, eine oder mehrere der folgenden Verbindungen dieser Schicht zugesetzt sein, insbesondere zusätzlich zu einem relativ hohen Anteil in dieser Schicht an einem Polyolefin-Homo- oder Copolymer (insbesondere mehr als 50 Gew.-%) wie einem LDPE:

- (ggf. weitere) Polyolefin-Homo- oder Copolymere;
- Polyvinylacetat Homo- oder Copolymere;
- (Meth)Acrylsäureester Homo- oder Copolymere;
- Polyether;
- Ionomere;
- Polyvinylacetale;
- Polyurethane;
- Copolymere der oben aufgelisteten Verbindungen, wie Ethylenvinylacetat-Copolymere (EVA oder EVAc).

Generell wird durch die Schmelzpunktabsenkung erreicht, dass sich bei der erfindungsgemäßen Folie bei Verwendung als Außenfolie auch eine durch Temperatur initiierte Verbindung der beiden Außenseiten der erfindungsgemäßen Folie erhalten lässt. Mit anderen Worten verhält sich die erfindungsgemäße Folie bei Verwendung als Außenfolie dann wie ein Klebeband, das spiralförmig um das Harz zum Abdichten und zur Verstärkung gewickelt wird, wobei die Klebrigkeit und die nachfolgende Verbindung durch die Temperaturerhöhung im Zuge der exothermen Harzhärtung bewirkt wird.

Liegt eine Mehrschicht-Folie vor, so kann dieses Verhalten der erfindungsgemäßen Folie, d.h. die Klebewirkung der beiden Außenschichten gegeneinander beim Umwickeln der Harzschicht im Bereich von 50°C bis 130°C auch dadurch erreicht werden, dass POP in beide Außenschichten der Folie eingebracht werden.

Vorteilhaft und Teil der Erfindung ist ebenfalls eine Anordnung, bei der sowohl die Schlauchinnenfolie als auch die innere Außenfolie erfindungsgemäß ausgebildet sind, also jeweils eine erfindungsgemäße Folie auf beiden Seiten des Harzes angeordnet ist, wobei diese beiden Folien mindestens ein POP zur direkten dauerhaften Harzanhaftung aufweisen.

Es sei angemerkt, dass zur Vermeidung einer etwaigen Verblockung der erfindungsgemäßen Folie übliche Antiblockmittel zugegeben werden können.

Alternative Anwendungen der erfindungsgemäßen Folie bei der grabenlosen Kanalsanierung mittels Schlauchliner-Technik sind die Verwendung als Preliner (Gleit- und Schutzschlauch, s.u.), der an der Kanalrohrwand zur Anlage kommt, die Verwendung als Gleitfolie mit im Wesentlichen halbkreisförmigem Querschnitt, welche am unteren Bereich der Kanalrohrwand zur Anlage kommt, die Verwendung als Kalibrierschlauch und/oder die Verwendung als Schutzfolie, die bei bestimmten Ausführungsformen zwischen einer Schlauchinnenfolie oder Außenfolie und der Harzschicht angeordnet ist und hierbei unmittelbar an der Harzschicht des Schlauchliners anliegt.

Mit Bezug auf das Vorgesagte, ist ein Preliner (auch Preliner-Folie genannt) eine dickwandige, das Rohr vollständig auskleidende Folie (gemäß der Stand der Technik üblicherweise aus PE mit einer hohen Dichte (HDPE - High Density Polyethylene), der an die Innenwand des Rohres angelegt wird und zum Schutz und zur Reibungsreduzierung des Schlauchliners dient. Nach Einbringen des Preliners wird der Schlauchliner in das Rohr eingezogen (Einzugsverfahren) oder invertiert (Inversionsverfahren). Der Preliner verhindert zum Beispiel eine Verklebung des Kunstharzes des Schlauchliners mit der Kanalwand und einen Kontakt des noch nicht gehärteten Harzes mit Schmutz und Wasser. Ferner verhindert die Preliner-Folie auch das Austreten von Harz aus dem Kanalsanierungssystem sowie die Kontamination von Erdreich und Grundwasser. Durch die Preliner-Folie werden außerdem die Zuläufe vor eindringendem Überschuss-Harz geschützt, so dass sich keine Harzpropfen und Verstopfungen bilden können. Auch hat ein Preliner beim Einzugsverfahren eine ähnliche Funktion wie bekannte Gleitfolien, welche zumeist die Querschnittsform eines Halbkreises aufweisen und an der Innenwand des Rohres angelegt werden. In diesem Fall kommt es insbesondere auf niedrige Reibungskoeffizienten zwischen der Gleitfolie und der Außenfolie des Schlauchliners an. Hierdurch wird der Schlauchliner beim Einziehen in das Rohr nicht durch die Rohrinnenwand bzw. Gegenstände im Rohr beschädigt, andererseits ist die Reibung zwischen Schlauchliner und Gleitfolie sehr niedrig und erleichtert ein Einziehen des Schlauchliners.

Ein Kalibrierschlauch im Sinne dieser Erfindung entspricht in seiner Funktion im Wesentlichen der Schlauchinnenfolie beim System UV-/Licht-härtender Glasfaserliner und ist bei einem Schlauchliner auch ebenso angeordnet, wie die Schlauchinnenfolie. Oft ist gemäß dem Stand der Technik ein Kalibrierschlauch an seiner Schlauchaußenseite (also beim Einsatz hin zur Kanalwand) mit einem Vlies oder Filz verbunden. Wenn ein Kalibrierschlauch verwendet wird, kann auf eine Schlauchinnenfolie verzichtet werden. Hierbei kann beim Einsatz der erfindungsgemäßen Folie als Kalibrierschlauch auch auf beiden Seiten Harz aufgetragen sein. Vorzugsweise wird das Harz in Form eines mit Harz getränkten Trägers, beispielsweise Glasfasern oder Synthesefaserfilze, mit der Folie in Kontakt gebracht. Die aktivierbare(n) Schicht(en) der erfindungsgemäßen Folie verbindet (verbinden) sich dann mit dem Harz oder mit einem harzgetränkten Trägermaterial (wie Vlies, Filz, oder Textil etc.). Erhalten wird somit ein "Rohr-im-Rohr"-System. Die Abfolge bei Verwendung eines Kalibrierschlauchs gemäß der Erfindung ist dann zum Beispiel wie folgt: Außen Kanalwand, bei Bedarf Preliner-Folie, dann außenliegende erfindungsgemäße harzhaftende Folie des Schlauchliners oder Beschichtung, dann Harzschicht bzw. mit Harz getränkte Trägerschicht (bildet das äußere Rohr), dann Harzschicht bzw. mit Harz getränkter Trägerschicht (bildet das innere Rohr), dann wiederum eine erfindungsgemäße Folie. Durch Füllung des Kalibrierschlauchs von innen mit Wasser, Druckluft etc. wird der Schlauchliner im zu sanierenden Rohr aufgestellt.

Ein System zur grabenlosen Kanalsanierung kann eine oder mehrere der erfindungsgemäßen Folien aufweisen. Bevorzugt ist derzeit der Einsatz von nur einer erfindungsgemäßen Folie in einem solchen System (als Schlauchinnenfolie, Schlauchaußenfolie, gewickelte innere Außenfolie, Preliner oder Gleitfolie). Entsprechend dem oben Gesagten können diese Folien aber auch auf verschiedenste Weise miteinander kombiniert werden.

Die erfindungsgemäße Anordnung lässt sich auch in anderen Bereichen mit Vorteil einsetzen, wobei diese prinzipiell für alle technischen Bereiche in Frage kommt, bei denen eine Folie mit Harz dauerhaft verbunden werden soll. Entsprechende Anwendungsbereiche finden sich im Schiffsbau, bei Einsatz von GFK, im Flugzeugbau, in der Prepreg-Industrie, bei der LaminatHerstellung mit Harzen, bei Reparaturen mit aushärtenden Harzen, der Oberflächenausrüstung von Harzen, bei der Auskleidung von Tanks und Behältern, die aus Harz und Träger gebildet werden, von innen und außen, etc.

Das mindestens eine Polyolefin-Plastomer kann mit einem zwischen 0,1 und 100 liegenden Gew.-%-Anteil in der besagten mindestens einen Schicht enthalten sein. Hier besteht ein großer Spielraum, je nach Anwendungsbereich und erwünschten Eigenschaften.

Gemäß einer bevorzugen Ausführungsform ist das mindestens eine Polyolefin-Plastomer mit mehr als 30 Gew.-% in der besagten mindestens einen Schicht enthalten ist. Vorzugsweise liegt der Gew.-%-Anteil bei mehr als 40 Gew.-% und besonders bevorzugt bei mehr als 50 Gew.-%.

Gemäß vorteilhaften Ausführungsformen ist in der besagten mindestens einen Schicht oder in mindestens einer weiteren Folienschicht mindestens ein weiteres Polymer enthalten, welches vorzugsweise aus der folgenden Gruppe stammt:

- Olefin-Homo- oder Copolymere, insbesondere Polyethylen (PE) oder Polypropylen (PP);
- Polyamide (PA);
- Amorphe Thermoplaste, wie z.B. Polystyrol (PS) und Polyvinylchlorid (PVC);
- Polyester, vorzugsweise Polyethylenterephthalat (PET);
- Polyurethane;
- Acryl-Ester-Polymere und -Copolymere;
- Styrol-Acrylnitril;
- Polyvinylester wie Polyvinylacetat;
- Polyvinylacetale;
- Polyvinylalkohole;
- Polyether;
- Polycarbonate
- Polyhydroxyalkanoate;
- Polysaccharide, Cellulose, Stärke;
- Copolymere der oben aufgelisteten Verbindungen.

Die konkrete Anwendung und die gewünschten Eigenschaften bestimmen hierbei die Wahl der Verbindungen. Der Anteil des oder der weiteren Polymere kann insgesamt bis zu 99,9 Gew.-% betragen.

Zur weiteren Verbesserung der Hafteigenschaften des Harzes im Zuge der Aushärtung kann die für die Auftragung des Harzes vorgesehene Folienseite vorbehandelt sein, um die Oberflächenspannung zu erhöhen. Für eine solche Vorbehandlung kommt vorzugsweise eine Corona-, Plasma- und/oder Flamm-Vorbehandlung in Frage.

Vorzugsweise - besonders im Falle des Einsatzes der erfindungsgemäßen Folie als Schlauchinnenfolie bei der grabenlosen Kanalsanierung (s.o.) - ist die Folie im Wesentlichen bzw. weitgehend durchlässig für UV-Licht, damit UV-Licht das auf der Folie aufzutragende Harz auszuhärten vermag. Wenn die erfindungsgemäße Folie als Schlauchaußenfolie bei der grabenlosen Kanalsanierung (s.o.) Verwendung findet, ist hingegen die Folie vorzugsweise im Wesentlichen bzw. weitgehend undurchlässig für UV-Licht, damit das auf der Folie aufzutragende Harz bei der Lagerung der Folie (einschließlich der aufgetragenen Harzschicht) gerade nicht ausgehärtet wird.

Die erfindungsgemäße Folie der erfindungsgemäßen Anordnung weist, insbesondere zur Verwendung als Schlauchinnenfolie, vorteilhafterweise eine radiale Dehnbarkeit von mindestens 15%, vorzugsweise von mindestens 20% und besonders bevorzugt von mindestens 25% auf. Insbesondere ist diese Dehnbarkeit vorteilhaft, wenn die erfindungsgemäße Folie als Schlauchinnenfolie bei der grabenlosen Kanalsanierung Verwendung findet, da auf diese Weise ein großer Durchmesserbereich bei den zu sanierenden Kanälen abgedeckt werden kann. Vorteilhafterweise findet ein Bruch der Folie im Aufblasversuch erst ab über 100% Dehnung statt.

Vorzugsweise, insbesondere im Falle des Einsatzes der erfindungsgemäßen Folie als besagte Schlauchinnenfolie, ist die erfindungsgemäße Folie stabil gegen Harze und wird vom Harz nicht angegriffen oder zerstört. Es ist aber möglich, dass bei der erfindungsgemäßen Anordnung zwischen der erfindungsgemäßen Folie und dem Harz Wechselwirkungen (wie Quellung und/oder Verblockung) zwischen der für die Auftragung des Harzes vorgesehene Folienseite und dem Harz stattfinden können. Die erfindungsgemäße Folie wird somit durch den Harzauftrag nicht beeinträchtigt. Eine Quellung der erfindungsgemäßen Folie mit Harz muss sich nicht nachteilig gestalten. In diesem Fall kann Harz sogar in gewissem Grad in die an Harz zu haftende Schicht der erfindungsgemäßen Folie eindringen, was nach der Aushärtung des Harzes die Verbindung von Folie und Harz fördern kann.

Vorteilhafterweise weist die erfindungsgemäße Folie wenigstens eine eigenständige Barriereschicht gegen Monomere wie beispielsweise Styrol auf, beispielsweise mit Polyamid (PA) mit bis zu 100 Gew.-%. Auf diese Weise wird verhindert, dass Harzbestandteile in die Folie ein- bzw. diese durchdringen. Alternativ oder zusätzlich weist die mindestens eine Barriereschicht eine Gasbarriere, beispielsweise EVOH mit bis zu 100 Gew.-% enthaltend, auf. Es können hierbei mindestens zwei unterschiedliche Barriereschichten vorhanden sein, beispielsweise eine erste Barriereschicht gegen Monomere und eine zweite Barriereschicht gegen Gase. Alternativ sind in einer einzigen Schicht beide Barrieren eingebaut. Als Barriereschicht gegen Wasser ist eine Schicht bestehend aus Cyclo-Olefin-Copolymer (COC) zu empfehlen.

Die Anzahl der Schichten kann je nach Einsatzgebiet gewählt werden. Es sind hierbei Monofolien mit nur einer Schicht (der erfindungsgemäßen) sowie Mehrschichtfolien mit vielen Schichten möglich. Genannt seien hier lediglich beispielhaft drei, vier, fünf, sieben oder auch bis zu 25 und mehr Schichten. Bei allen diesen mehrschichtigen Folien enthält erfindungsgemäß mindestens eine der beiden Außenschichten das besagte mindestens ein Polyolefin-Plastomer. Beispielhafte Schichtfolgen sind:

Bei einem 3-Schicht-Aufbau:

$$\text{(PE + POP) / Haftvermittler (HV) / Polyamid (PA);}$$

oder

$$\text{(PA + POP) / Haftvermittler (HV) / PE.}$$

Bei einem 5-Schicht-Aufbau:

$$\text{(PE + POP) / HV / PA / HV / PE;}$$

oder

$$\text{(PA + POP) / HV / PA / HV / PE.}$$

Gemäß einer vorteilhaften Ausführungsform weist die erfindungsgemäße Folie mindestens eine eigenständige Schicht auf, die ein thermoplastisches Olefin-Homo- oder Copolymer enthält, vorteilhafterweise zu mehr als 50 Gew.-%, bevorzugt zu mehr als 75 Gew.-%, und besonders bevorzugt zu mehr als 95 Gew.-%. Olefin-Homo- oder Copolymere im Sinne der vorliegenden Erfindung sind thermoplastische Polymere von $\alpha,\beta$-ungesättigten Olefinen mit zwei bis sechs Kohlenstoffatomen, wie z.B. Polyethylen (PE, insbesondere LDPE oder HDPE), Polypropylen (PP), Polybutylen (PB), Polyisobutylen (PI) oder Mischungen aus wenigstens zwei der genannten Polymere. Mit "LDPE" wird Polyethylen niedriger Dichte bezeichnet, welches eine Dichte im Bereich von 0,86-0,93 g/cm$^3$ aufweist und sich durch einen hohen Verzweigungsgrad der Moleküle auszeichnet. Mit "HDPE" wird Polyethylen hoher Dichte bezeichnet, welches nur eine geringe Verzweigung der Molekülketten aufweist, wobei die Dichte im Bereich zwischen 0,94-0,97 g/cm$^3$ liegen kann. Das Olefin-Homo- oder Copolymer ist bevorzugt Polyethylen (PE). Dieses wird vorzugsweise in Form von High Density Polyethylen (HDPE) verwendet. Auch LDPE und/oder LLDPE (Linear Low Density Polyethylene) sind mit Vorteil einsetzbar. Ferner eignen sich Polyolefine, insbesondere Polyethylene, die auf Basis von Metallocen-Katalysatoren polymerisiert wurden (mPE), wie mLDPE (metallocen LDPE) und mLLDPE (metallocen LLDPE). Polyethylen ist in unterschiedliche Kategorien klassiert, hauptsächlich in Bezug auf ihre Dichte und Verzweigung. Seine mechanischen Eigenschaften hängen in bedeutendem Maße von Variablen wie der Länge und der Art der Verzweigung, der Kristallstruktur und dem Molekulargewicht ab. Die meistverkauften Polyethylene sind HDPE, LLDPE und LDPE. Gemäß einer anderen vorteilhaften Alternative findet als Olefin-Homo- oder Copolymer Polypropylen (PP) Verwendung. Mischungen von verschiedenen, einschließlich der oben aufgezählten, Olefin-Homo- oder Copolymeren sind ohne Weiteres möglich.

Die vorgenannte eigenständige Schicht mit mindestens einem thermoplastischen Olefin-Homo- oder Copolymer ist vorzugsweise als diejenige Außenschicht der erfindungsgemäßen Folie vorgesehen, welche der das mindestens ein POP enthaltenden Außenschicht gegenüberliegt.

Zur Herstellung der genannten Haftvermittlerschicht(en) können übliche Haftvermittler eingesetzt werden. Vorzugsweise basiert/basieren die Haftvermittlerschicht(en) jeweils unabhängig voneinander auf wenigstens einem modifizierten thermoplastischen Polymer, vorzugsweise auf wenigstens einem modifizierten Olefin-Homo- oder Copolymer. Als Olefin-Homo- oder Co-polymere können dabei dieselben Olefin-Homo- oder Copolymere eingesetzt werden, die oben bereits genannt wurden, nur dass diese modifiziert sind. Besonders bevorzugt basiert/basieren die Haftvermittlerschicht(en) jeweils unabhängig voneinander auf wenigstens einem modifizierten Ethylen-Homo- oder Copolymer und/oder wenigstens einem modifizierten Propylen-Homo- oder Copolymer, welches mit wenigstens einer organischen Säure oder wenigstens einem vorzugsweise zyklischen organischen Säureanhydrid, vorzugsweise mit Maleinsäureanhydrid, modifiziert ist. Auch Ethylen-Vinylacetat-, Ethylen-Vinylalkohol- (EVOH) und Ethylen-(Meth)acrylat-Copolymere, in ihrer modifizierten oder nicht modifizierten Form, eignen sich bestens als Haftvermittler.

Gemäß dem Vorgesagten kann eine 7-Schicht-Folie beispielsweise wie folgt aufgebaut sein:

| Schichtnummer | Zusammensetzung | Anteil in Schicht in % | Dicke in $\mu$m |
|---|---|---|---|
| 1 | • POP<br>• LDPE | • 80<br>• 20 | 16-20 |
| 2 | HV | 100 | 3-6 |
| 3 | PA | 100 | 2 |
| 4 | EVOH | 100 | 4 |
| 5 | PA | 100 | 2 |
| 6 | HV | 100 | 3-6 |
| 7 | LDPE | 100 | 14-18 |
|  |  |  | Gesamtdicke: 44-58 $\mu$m |

Eine beispielhafte 5-Schicht-Folie kann wie folgt aufgebaut sein:

| Schichtnummer | Zusammensetzung | Anteil in Schicht in % | Dicke in $\mu$m |
|---|---|---|---|
| 1 | • POP<br>• LDPE | • 80<br>• 20 | 25-35 |
| 2 | HV | 100 | 4-8 |
| 3 | CoPA (Copolyamid) | 100 | 20-30 |
| 4 | HV | 100 | 4-8 |
| 5 | LDPE | 100 | 25-35 |
|  |  |  | Gesamtdicke: 78-116 $\mu$m |

Vorzugsweise ist die für die Harzauftragung vorgesehene Folienseite thermisch aktivierbar. Eine solche thermisch aktivierbare Schicht kann ohne Weiteres im Zuge der Folienextrusion (Cast-Extrusion, Blasextrusion) oder auch durch Extrusionsbeschichtung mit den aktivierbaren Polyolefin-Plastomeren bereitgestellt werden. Hierbei ist es vorteilhaft, wenn die Aktivierungstemperatur unterhalb einer Temperatur von 130 °C, vorzugsweise unterhalb von 100 °C, liegt.

Die für die Auftragung des Harzes bzw. zur Verbindung mit dem Harz vorgesehene Schicht weist vorzugsweise eine Dicke von 1 bis 500 $\mu$m, bevorzugt von 5 bis 200 $\mu$m, besonders bevorzugt von 10 bis 100 $\mu$m und am meisten bevorzugt von 15 $\mu$m bis 80 $\mu$m auf.

Die erfindungsgemäße Folie weist vorzugsweise eine Gesamtdicke von 20 bis 1000 µm, bevorzugt von 40 bis 400 µm, insbesondere von 50 bis 250 µm auf.

Entsprechend dem Vorgesagten kann das Harz der erfindungsgemäßen Anordnung mit einem Trägermaterial wie beispielsweise Glasfasern vermischt oder auf ein Trägermaterial wie beispielsweise einem Vlies aufgebracht sein, wobei die Verbindung unmittelbar zwischen Folie und Harz (anstelle des Vlieses wie im Stand der Technik) vorliegt. Die Erfindung betrifft hierbei sowohl eine Anordnung einer Folie mit noch nicht ausgehärtetem Harz, wobei also das Harz noch nicht fest mit der Folie verbunden ist, als auch eine Anordnung von einer Folie mit dauerhaft und fest mit der Folie verbundenem Harz nach der Harzaushärtung.

Entsprechend dem Vorgesagten betrifft die Erfindung ebenfalls eine - Harz-gehärtete oder noch nicht harz-gehärtete - Anordnung, bei der auf beiden Seiten des Harzes eine erfindungsgemäße Folie vorgesehen ist, wobei in der jeweils zum Harz gerichteten Schicht mindestens ein POP zur direkten dauerhaften Harzanhaftung nach Harzhärtung vorhanden ist.

Als reaktives Kunststoffharz kommen zum Beispiel handelsübliche UP-Harze (Polyester- bzw. ungesättigte Polyesterharze), VE-Harze (Vinylesterharze) oder EP-Harze (Epoxid-Harze) zum Einsatz. Die Härtung der Harze erfolgt bei UP- oder VE-Harzen zum Beispiel mit Hilfe von Photoinitiatoren. Alternativ erfolgt die Härtung thermisch. Beispiele für einsetzbare, handelsübliche Harze sind ungesättigte Polyesterharze des Typs 1140 nach Tabelle 3 von DIN 16 946-2 entsprechend der Gruppe 3 in Tabelle 1 von DIN 18 820. Beispiele weiterer Harzrezepturen finden sich in der DE10 2011 002 032 A1.

Ein typisches Harz besteht zum Beispiel aus: 42,5 Gew.-% Styrol, 21 Gew.-% Neopentylglycol, 18 Gew.-% Phthalsäure, 14 Gew.-% Maleinsäure, 4 Gew.-% Monopropylenglykol. Als Initiator ist ein UV-aktivierbarer Photoinitiator (z.B. 0,5 Gew.-% Irgacure 819 der Ciba AG) enthalten.

Bei einer derartigen erfindungsgemäßen Anordnung ist die erfindungsgemäße Folie vorzugsweise zwischen der geschlossenen Harzschicht und mindestens einer weiteren Schicht, vorzugsweise bestehend aus einem Nonwoven- oder einem Woven-Material, aus Papier oder aus Pappe, angeordnet.

Die Erfindung betrifft ebenfalls einen Schlauchliner mit einer erfindungsgemäßen Anordnung von Folie(n) und Harz. Ein solcher Schlauchliner weist dann die übrigen bekannten Bestandteile, also die nicht zur mindestens einen erfindungsgemäßen Anordnung gehörenden, auf. Wenn beispielsweise die Anordnung von innerer Außenfolie und Harzschicht erfindungsgemäß aufgebaut ist, weist ein erfindungsgemäßer Schlauchliner zudem insbesondere die äußere Außenfolie sowie die Schlauchinnenfolie auf.

Vorzugsweise enthält die erfindungsgemäße Folie - je nach Anwendungsfall - einen oder mehrere der folgenden Stoffe in mindestens einer der Folienschichten: Polystyrol (PS); Polyhalogenide, wie z.B. PVC und/oder Polyvinylidenchlorid (PVdC); Ethylenvinylalkohol-Copolymer (EVOH), Polyvinylalkohol (PVOH oder PVAL), Haftvermittler, Ethylenvinylacetat (EVAc); ein oder mehrere Ionomere; ein oder mehrere Poly(Meth)acrylate; Ethylen-haltige Poly(meth)acrylate, Polyvinylacetat (PVAc); Polycarbonat (PC); Polyacrylnitril (PAN); weitere Polyester wie Polybutylenterephthalat (PBT), Polyethylennaphthalat (PEN), Polymilchsäure (PLA) und/oder Polyhydroxyalkanoate (PHA); ein oder mehrere Ethylenacrylsäure-Copolymere (EAA); Polyvinylbutyral (PVB); Polyvinylacetal; Celluloseacetat (CA); Celloloseacetobutyrat (CAB); Polysaccharide; Stärke; zyklisches Olefin-Copolymer (COC).

Zur Verbesserung der Folieneigenschaften können ein oder mehrere der folgenden Stoffe bzw. Additive im Zuge der Extrusion in einer oder in mehreren Schichten eingesetzt werden. Als Additive werden zum Beispiel Haftvermittler, funktionalisierte Polymere wie z.B. EVOH, optische Aufheller, thermische Stabilisatoren, Gleitmittel, Antioxidantien, Oxygen scavenger, Abstandshalter (z.B. Silica-Partikel, SAS), Slip-/Antiblockmittel, Farben, Pigmente, Schäumungsmittel, Antistatika, Prozesshilfsmittel, Lubricating Agents, Flammschutzmittel, Flammhemmer, Impact Modifier, Schlagzähverbesserer, Anti-Hydrolysemittel, UV-Absorber, UV-Schutzmittel, Stabilisatoren, Antifog-Additive, Wachse, Wachsadditive, Trennmittel, Siegel- oder Peel-Additive, Nukleierungsmittel, Combatibilizer (Verträglichkeitsmacher), Fließmittel, Fließverbesserer, Melt Strength Enhancer, Molekulargewichtserhöher, Vernetzer oder Weichmacher zugesetzt.

Die erfindungsgemäßen Folien lassen sich auf unterschiedliche Weise herstellen. Eine bevorzugte Herstellung wird mittels Extrusion bzw. Coextrusion realisiert, beispielsweise durch Blasextrusion oder Cast-Extrusion. Am meisten bevorzugt ist die Herstellung als schlauchförmige Blasfolie.

Eine weitere bevorzugte Herstellungsmethode ist die Beschichtung, insbesondere Extrusionsbeschichtung, mittels derer insbesondere die POP enthaltende Schicht und/oder eine den Schmelzpunkt absenkende Folienaußenschicht aufgetragen wird, insbesondere durch Zusätze wie z.B. EVAc.

Vorzugsweise ist die erfindungsgemäße Folie nicht orientiert. Weiterhin ist sie vorzugsweise siegelfähig, auch wenn sie bei der Ausführung als Schlauchinnenfolie keine Siegelnaht aufweist.

Die erfindungsgemäße Folie kann auch geschäumt werden oder mindestens eine geschäumte Schicht enthalten.

Die Folie kann ferner auf der oder den Oberfläche/n noch mit einem Pulver oder Puder versehen werden. Bevorzugt wird dazu beispielsweise Talkum eingesetzt.

Weitere Verarbeitungsmöglichkeiten bestehen in einem Zusammenbringen der erfindungsgemäßen Folie mit einem Gelege oder Gewirke, z.B. einem Kunststoffnetz oder einem Gitter. Alternativ kann dieses Gitter, Gelege bzw. Gewirke in die Folie zum Zwecke der weiteren Verstärkung mit eingebracht werden.

Die Erfindung wird anhand von Figuren näher erläutert. Es zeigen:

**Fig. 1** einen Querschnitt durch ein zu sanierendes Kanalrohr mit einem Preliner und einem Schlauchliner, und

**Fig. 2** eine Seitenansicht auf eine innere, spiralförmig aufgewickelte Außenfolie.

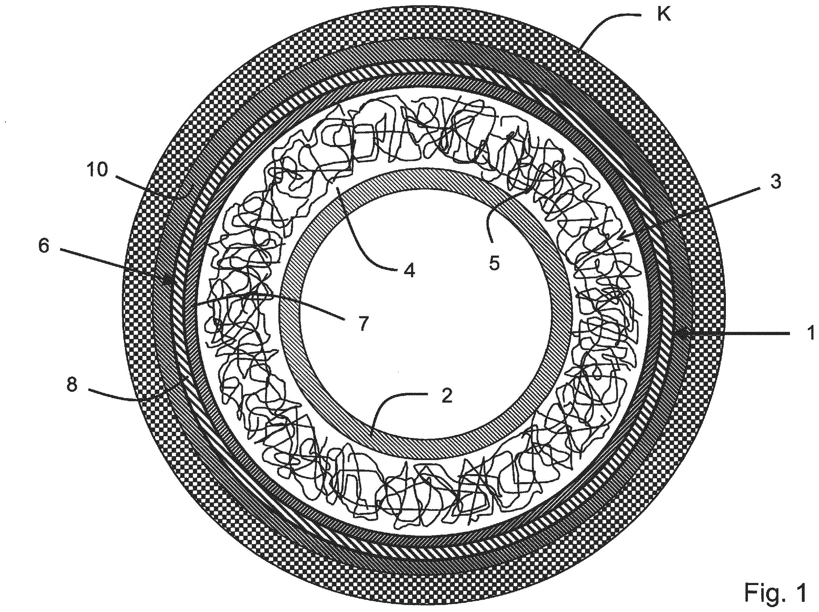

Die Fig. 1 zeigt ein vollständiges System eines zu sanierenden Kanalrohrs K, in den ein schlauchförmiger, aus dem Stand der Technik bekannter Preliner 10 eingezogen ist, der Kontakt mit der Wand des Kanalrohrs K hat. Der Preliner 10 umgibt einen Schlauchliner 1, der vorliegend eine (vorzugsweise im Wesentlichen UV-und lichtdurchlässige) Schlauchinnenfolie 2, ein Harz-Trägersystem 3, welches Harz 4 und beispielsweise Glasfasern 5 als Träger enthält, sowie ein System 6 aus - in der gezeigten Ausführungsform - einer inneren Außenfolie 7 und einer äußeren (vorzugsweise im Wesentlichen UV-und lichtdichten) Außenfolie 8 umfasst. Es sind nicht zwangsläufig eine innere und eine äußere Außenfolie 7, 8 vorhanden. Stattdessen kann insbesondere auch nur eine einzige Außenfolie vorgesehen sein.

Bei einer vorteilhaften Ausführungsform der Erfindung enthält die zum Harz 4 gerichtete Schicht der Schlauchinnenfolie 2 mindestens ein POP entsprechend dem Vorgesagten. Die Schlauchinnenfolie 2 kann hierbei z.B. entsprechend den unten aufgeführten Ausführungsbeispielen aufgebaut sein, wobei all diese Folien Mehrschichtfolien sind. Im Zuge der Harzaushärtung - meistens realisiert durch das Führen einer UV-Lichtquelle durch den dann aufgeblasenen Schlauchliner 1 - verbindet sich erfindungsgemäß das Harz 4 direkt mit der POP enthaltenden Schicht der Schlauchinnenfolie 2.

Bei dem vorgenannten Ausführungsbeispiel wird eine erfindungsgemäße Anordnung gebildet von der Schlauchinnenfolie 2 und dem Harz 4, welches insbesondere mit einem Trägermaterial versehen ist oder in einem Trägermaterial 5 eingebettet ist.

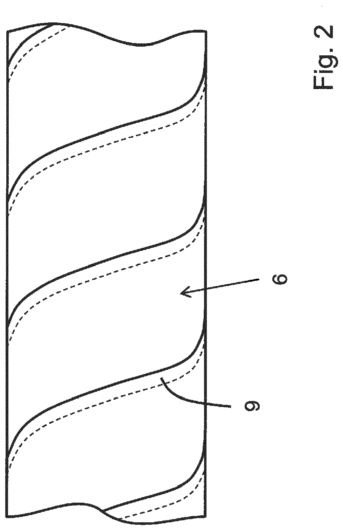

Bei einer anderen vorteilhaften Ausführungsform der Erfindung ist die innere Außenfolie 7 als erfindungsgemäße Folie ausgebildet, wobei die das mindestens eine POP enthaltende Schicht die dem Harz 4 zugewandte Schicht ist. Diese innere Außenfolie 7 ist bevorzugt eine Flachfolie, die spiralförmig um das Harz-Trägersystem 3 mit Überlappungsbereichen 9 herum gewickelt ist, wie dies in der Seitenansicht der inneren Außenfolie 7 gemäß der Fig. 2 gezeigt ist. Da diese Umwicklung absolut dicht sein muss, insbesondere gegen den Austritt von Monomeren oder Chemikalien, muss die innere Außenfolie 7 in den Überlappungsbereichen 9 mit sich haften und verbinden. Die Verbindung zum Harz 4 (auf der zum Rohrinneren weisenden Schicht der inneren Außenfolie 7) sowie die Verbindung der beiden Folienaußenschichten in den Überlappungsbereichen 9 wird durch die thermische Aktivierung im Zuge der exothermen Aushärtung des Harzes erreicht. Hierbei treten Temperaturen im Bereich von ca. 65°C bis 130°C auf. Da die Überlappungsbereiche 9 auf der dem Harz 4 abgewandten Seite der inneren Außenfolie 7 angeordnet sind, wird bei Aushärtung durch eine durch das vom Schlauchliner 1 gebildete Rohr gezogene UV-Quelle in den Überlappungsbereichen 9 eine Temperatur von lediglich ca. 65°C bis 90°C erreicht. Bei diesen Temperaturen muss also schon die Verbindung der inneren Außenfolie 7 in den Überlappungsbereichen 9 erfolgen. Um dies zu realisieren, wird der Schmelzpunkt der dem Harz 4 abgewandten Folienschicht der inneren Außenfolie 7 abgesenkt, gemäß einer besonders bevorzugten Ausführungsform durch Zugabe von EVAc (Ethylenvinylacetat-Copolymer). Die POP enthaltende Schicht der inneren Außenfolie 7 verbindet sich also einerseits direkt mit dem Harz 4 und andererseits in den Überlappungsbereichen 9 dichtend mit der anderen Außenschicht der erfindungsgemäß ausgestalteten inneren Außenfolie 7.

Bei dem vorgenannten Ausführungsbeispiel wird eine erfindungsgemäße Anordnung gebildet von der inneren Außenfolie 7 und dem Harz 4, welches insbesondere mit einem Trägermaterial versehen ist oder in einem Trägermaterial 5 eingebettet ist.

Ein Ausführungsbeispiel, welches ebenfalls durch die Fig. 1 und 2 repräsentiert ist, sieht vor, dass sowohl die Schlauchinnenfolie 2 als auch die innere Außenfolie 7 als erfindungsgemäße Folie ausgebildet sind. Bei beiden Folien enthalten die mit dem Harz in Berührung kommenden Außenschichten jeweils mindestens ein POP zur dauerhaften Verbindung mit dem Harz nach dessen Härtung. Es resultiert eine erfindungsgemäße Anordnung mit dem Aufbau (von innen nach außen): Schlauchinnenfolie 2 / Harz 4 (plus Trägermaterial 5) / innere Außenfolie 7.

Gemäß einer nicht dargestellten Ausführungsform ist die Außenfolie nicht aufgeteilt in eine innere und äußere Außenfolie. Vielmehr liegt nur eine Außenfolie vor, die vorzugsweise als Flachfolie ausgeführt ist, welche aber nicht spiralförmig um das Harz gewickelt wird, sondern umfangseitig um das Harz gelegt wird und dann an einer in Längsrichtung laufenden Längsnaht verschlossen wird. Eine solche Außenfolie kann als erfindungsgemäße Folie mit einer Schicht mit mindestens einem POP zur Harzhaftung ausgebildet sein. Zusätzlich kann auch die Schlauchinnenfolie als erfindungsgemäße Folie ausgebildet sein (s. oben).

**Ausführungsbeispiele:**

Die nachfolgenden Beispiele und Vergleichsbeispiele dienen zur Erläuterung der Erfindung und sind nicht einschränkend auszulegen. Im Folgenden werden verschiedene Vergleichsbeispiele (Folien V1-V10) und erfindungsgemäße Beispielfolien (Folien B1-B17) vorgestellt, die hinsichtlich ihrer Haftung untersucht wurden.

## I. Verwendete Materialien

Das in vielen Beispielen verwendete LDPE ist Lupolen 2420 F von der Firma LyondellBasell Polymers. Auch Lupolen 3010D ist ein LDPE von LyondellBasell Polymers.

Das im Vergleichsbeispiel V5 verwendete mLLDPE ist Exceed 1018 EB von der Firma ExxonMobil Chemical Company. Dieses ist ein mittels Metallocen-Katalyse hergestelltes Ethylen-Copolymer, bei dessen Polymerisation neben Ethylen Hexen als weiteres Co-Monomer eingesetzt wird.

Inspire 137, ehemals von The Dow Chemical Company, nun von Braskem, ist ein Polypropylen.

Durethan C38 F von Lanxess ist ein Copolyamid mittlerer Viskosität.

Moplen EP240H ist ein nukleiertes heterophasiges Polypropylen-Copolymer von LyondellBasell.

Admer QB510E von Mitsui Chemicals ist ein auf Polypropylen basierender Haftvermittler, das mit Maleinsäureanhydridgruppen modifiziert ist.

Admer NF498E von Mitsui Chemicals ist ein mit Maleinsäureanhydridgruppen modifiziertes LDPE, besitzt eine große Adhäsion zu PET, EVOH und PA, ist sehr gut verarbeitbar sind und weist eine thermische Stabilität auf, die äquivalent zu gewöhnlichem PE ist.

EVAL T101B von der Firma EVAL Europe ist ein Polymer auf Ethylen-Vinylalkohol-Copolymer-Basis (EVOH).

Exact 0201 von der Firma Borealis Plastomers v.o.f. ist ein Polyolefin-Plastomer (POP), genauer ein Ethylenbasiertes Octen-Plastomer, das in einem Polymerisationsprozess in Lösung unter Verwendung eines Metallocen-Katalysators hergestellt wird. Seine Dichte liegt bei 0,902 g/cm$^3$ entsprechend ISO 1183 (bei 23 °C).

Affinity PL 1850D ist ein Polyolefin-Plastomer (POP) der Firma The Dow Chemical Company, das mit Hilfe eines Metallocen-Katalysators hergestellt wird.

Elvax 3165 von der Firma DuPont ist ein extrudierbares Ethylenvinylacetat-Copolymerharz in Pelletform, das in konventionellen Extrudereinrichtungen verwendet werden kann.

Das für die Harzhaftung verwendete Harz enthielt 42,5 Gew.-% Styrol, 21 Gew.-% Neopentylglycol, 18 Gew.-% Phthalsäure, 14 Gew.-% Maleinsäure, Gew.-4% Monopropylenglykol. Als Initiator ist ein UV-aktivierbarer Photoinitiator (z.B. 0,5 Gew.-% Irgacure 819 von CIBA) enthalten.

## II. Herstellung der Mehrschichtfolien

Die erfindungsgemäßen Mehrschichtfolien der Beispiele B1-B7, B9-14 und B16-17 sind 5-Schicht Folien. Die erfindungsgemäße Mehrschichtfolie des Beispiels B15 besteht aus drei Schichten. Die erfindungsgemäße Mehrschichtfolie des Beispiels B8 weist sieben Schichten auf. Die einzelnen Schichten der Mehrschichtfolien grenzen jeweils in der Reihenfolge unmittelbar aneinander an, in der sie nachstehend aufgeführt sind ("Schichtnummer"). Die für den Auftrag der Harzschicht vorgesehene Außenschicht jeder Folie ist stets die Schicht 1 ("zum Harz").

Die erfindungsgemäßen Folien wurden mittels Blasfolien-Co-Extrusion und anschließendem beidseitigen Aufschneiden in Form von Flachfolien hergestellt.

Die in den Tabellen angegebenen prozentualen Anteile der einzelnen Chemikalien in den Schichten sind Gewichtsprozent-Angaben.

## III. Vermessene Folien

**Vergleichsbeispiel V1:** Flachfolie, 100 μm, normales PE in der Schicht 1:

| Schichtnummer | Zusammensetzung | Anteil in Schicht in % | Dicke in μm |
|---|---|---|---|
| 1 zum Harz | Lupolen 2420 F | 100 | 30 |
| 2 | Admer NF498E | 100 | 10 |
| 3 | Durethan C38 F | 100 | 20 |
| 4 | Admer NF498E | 100 | 10 |
| 5 | Lupolen 2420 F | 100 | 30 |

(fortgesetzt)

| Schichtnummer | Zusammensetzung | Anteil in Schicht in % | Dicke in $\mu$m |
|---|---|---|---|
| | | | Summe: 100 $\mu$m |

**Vergleichsbeispiel V2:** Flachfolie, 100 $\mu$m, normales PP in der Schicht 1:

| Schichtnummer | Zusammensetzung | Anteil in Schicht in % | Dicke in $\mu$m |
|---|---|---|---|
| 1 zum Harz | Inspire 137 | 100 | 30 |
| 2 | Admer QB 510E | 100 | 10 |
| 3 | Durethan C38 F | 100 | 20 |
| 4 | Admer QB 510 E | 100 | 10 |
| 5 | Inspire 137 | 100 | 30 |
| | | | Summe: 100 $\mu$m |

**Vergleichsbeispiel V3:** Flachfolie, 100 $\mu$m, heterophasiges Polypropylen-Copolymer in der Schicht 1:

| Schichtnummer | Zusammensetzung | Anteil in Schicht in % | Dicke in $\mu$m |
|---|---|---|---|
| 1 zum Harz | Moplen EP 240 H | 100 | 30 |
| 2 | Admer QB 510E | 100 | 10 |
| 3 | Durethan C38 F | 100 | 20 |
| 4 | Admer QB 510 E | 100 | 10 |
| 5 | Moplen EP 240 H | 100 | 30 |
| | | | Summe: 100 $\mu$m |

**Vergleichsbeispiel V4:** Flachfolie, 100 $\mu$m, normales PE in der Schicht 1:

| Schichtnummer | Zusammensetzung | Anteil in Schicht in % | Dicke in $\mu$m |
|---|---|---|---|
| 1 zum Harz | Lupolen 3010 D | 100 | 30 |
| 2 | Admer NF498E | 100 | 10 |
| 3 | Durethan C38 F | 100 | 20 |
| 4 | Admer NF498E | 100 | 10 |
| 5 | Lupolen 3010 D | 100 | 30 |
| | | | Summe: 100 $\mu$m |

**Vergleichsbeispiel V5:** Flachfolie, 100 $\mu$m, normales PE in der Schicht 1:

| Schichtnummer | Zusammensetzung | Anteil in Schicht in % | Dicke in $\mu$m |
|---|---|---|---|
| 1 zum Harz | • Lupolen 3010D<br>• Exceed 1018 EB | • 70<br>• 30 | 30 |
| 2 | Admer NF498E | 100 | 10 |
| 3 | Durethan C38 F | 100 | 20 |
| 4 | Admer NF498E | 100 | 10 |
| 5 | Lupolen 3010D | 100 | 30 |

(fortgesetzt)

| Schichtnummer | Zusammensetzung | Anteil in Schicht in % | Dicke in $\mu$m |
|---|---|---|---|
| | | | Summe: 100 $\mu$m |

**Vergleichsbeispiele V6 bis V10:**
Die Vergleichsbeispiele V1 bis V5 wurden auf der Seite, die gegen Harz haften soll, mit einer Corona-Behandlung versehen, die zu einer Oberflächenspannung von 48 mN/m führte.

**Beispiel B1:** Flachfolie, 100 $\mu$m, normales PE mit POP in der Schicht 1:

| Schichtnummer | Zusammensetzung | Anteil in Schicht in % | Dicke in $\mu$m |
|---|---|---|---|
| 1 zum Harz | • Lupolen 2420 F<br>• Exact 0201 | • 20<br>• 80 | 30 |
| 2 | Admer NF498E | 100 | 10 |
| 3 | Durethan C38 F | 100 | 20 |
| 4 | Admer NF498E | 100 | 10 |
| 5 | Lupolen 2420 F | 100 | 30 |
| | | | Summe: 100 $\mu$m |

**Beispiel B2:** Flachfolie, 100 $\mu$m, mit 100 % POP in der Schicht 1:

| Schichtnummer | Zusammensetzung | Anteil in Schicht in % | Dicke in $\mu$m |
|---|---|---|---|
| 1 zum Harz | Exact 0201 | 100 | 30 |
| 2 | Admer NF498E | 100 | 10 |
| 3 | Durethan C38 F | 100 | 20 |
| 4 | Admer NF498E | 100 | 10 |
| 5 | Lupolen 2420 F | 100 | 30 |
| | | | Summe: 100 $\mu$m |

**Beispiel B3:** Flachfolie, 100 $\mu$, normales PE mit POP in der Schicht 1:

| Schichtnummer | Zusammensetzung | Anteil in Schicht in % | Dicke in $\mu$m |
|---|---|---|---|
| 1 zum Harz | • Lupolen 2420 F<br>• Exact 0201 | • 50<br>• 50 | 30 |
| 2 | Admer NF498E | 100 | 10 |
| 3 | Durethan C38 F | 100 | 20 |
| 4 | Admer NF498E | 100 | 10 |
| 5 | Lupolen 2420 F | 100 | 30 |
| | | | Summe: 100 $\mu$m |

**Beispiel B4:** Flachfolie, 100 $\mu$m, normales PE mit POP in der Schicht 1:

| Schichtnummer | Zusammensetzung | Anteil in Schicht in % | Dicke in $\mu$m |
|---|---|---|---|
| 1 zum Harz | • Lupolen 2420 F<br>• Affinity PL 1850 G | • 20<br>• 80 | 30 |

(fortgesetzt)

| Schichtnummer | Zusammensetzung | Anteil in Schicht in % | Dicke in $\mu$m |
|---|---|---|---|
| 2 | Admer NF498E | 100 | 10 |
| 3 | Durethan C38 F | 100 | 20 |
| 4 | Admer NF498E | 100 | 10 |
| 5 | Lupolen 2420 F | 100 | 30 |
| | | | Summe: 100 $\mu$m |

**Beispiel B5:** Flachfolie, 100 $\mu$m, normales PE mit POP in der Schicht 1:

| Schichtnummer | Zusammensetzung | Anteil in Schicht in % | Dicke in $\mu$m |
|---|---|---|---|
| 1 zum Harz | • Lupolen 3010 D<br>• Exact 0201 | • 30<br>• 70 | 30 |
| 2 | Admer NF498E | 100 | 10 |
| 3 | Durethan C38 F | 100 | 20 |
| 4 | Admer NF498E | 100 | 10 |
| 5 | Lupolen 3010 D | 100 | 30 |
| | | | Summe: 100 $\mu$m |

**Beispiel B6:** Flachfolie, 100 $\mu$m, normales PE mit POP in der Schicht 1:

| Schichtnummer | Zusammensetzung | Anteil in Schicht in % | Dicke in $\mu$m |
|---|---|---|---|
| 1 zum Harz | • Lupolen 3010 D<br>• Affinity PL 1850 G | • 30<br>• 70 | 30 |
| 2 | Admer NF498E | 100 | 10 |
| 3 | Durethan C38 F | 100 | 20 |
| 4 | Admer NF498E | 100 | 10 |
| 5 | Lupolen 3010 D | 100 | 30 |
| | | | Summe: 100 $\mu$m |

**Beispiel B7:** Flachfolie, 100 $\mu$m, normales PE mit POP in der Schicht 1:

| Schichtnummer | Zusammensetzung | Anteil in Schicht in % | Dicke in $\mu$m |
|---|---|---|---|
| 1 zum Harz | • Lupolen 3010 D<br>• Affinity PL 1850 G | • 30<br>• 70 | 42,5 |
| 2 | Admer NF498E | 100 | 5 |
| 3 | EVALT101B | 100 | 5 |
| 4 | Admer NF498E | 100 | 5 |
| 5 | Lupolen 3010 D | 100 | 42,5 |
| | | | Summe: 100 $\mu$m |

**Beispiel B8:** Flachfolie, 100 $\mu$, normales PE mit POP in der Schicht 1:

| Schichtnummer | Zusammensetzung | Anteil in Schicht in % | Dicke in $\mu$m |
|---|---|---|---|
| 1 zum Harz | • Lupolen 3010 D<br>• Affinity PL 1850 G | • 30<br>• 70 | 37,5 |
| 2 | Admer NF498E | 100 | 5 |
| 3 | Durethan C38 F | 100 | 5 |
| 4 | EVALT101B | 100 | 5 |
| 5 | Durethan C38 F | 100 | 5 |
| 6 | Admer NF498E | 100 | 5 |
| 7 | Lupolen 3010 D | 100 | 37,5 |
|  |  |  | Summe: 100 $\mu$m |

**Beispiel B9:** Flachfolie, 100 $\mu$m, normales PE mit POP in der Schicht 1:

| Schichtnummer | Zusammensetzung | Anteil in Schicht in % | Dicke in $\mu$m |
|---|---|---|---|
| 1 zum Harz | • Lupolen 3010 D<br>• Exact 0201 | • 70<br>• 30 | 30 |
| 2 | Admer NF498E | 100 | 10 |
| 3 | Durethan C38 F | 100 | 20 |
| 4 | Admer NF498E | 100 | 10 |
| 5 | Lupolen 3010 D | 100 | 30 |
|  |  |  | Summe: 100 $\mu$m |

**Beispiel B10:** Flachfolie, 100 $\mu$m, normales PE mit POP in der Schicht 1:

| Schichtnummer | Zusammensetzung | Anteil in Schicht in % | Dicke in $\mu$m |
|---|---|---|---|
| 1 zum Harz | • Lupolen 3010 D<br>• Exact 0201 | • 60<br>• 40 | 30 |
| 2 | Admer NF498E | 100 | 10 |
| 3 | Durethan C38 F | 100 | 20 |
| 4 | Admer NF498E | 100 | 10 |
| 5 | Lupolen 3010 D | 100 | 30 |
|  |  |  | Summe: 100 $\mu$m |

**Beispiel B11:** Flachfolie, 100 $\mu$m, normales PE mit POP in der Schicht 1:

| Schichtnummer | Zusammensetzung | Anteil in Schicht in % | Dicke in $\mu$m |
|---|---|---|---|
| 1 zum Harz | • Lupolen 3010 D<br>• Exact 0201 | • 90<br>• 10 | 30 |
| 2 | Admer NF498E | 100 | 10 |
| 3 | Durethan C38 F | 100 | 20 |
| 4 | Admer NF498E | 100 | 10 |
| 5 | Lupolen 3010 D | 100 | 30 |

(fortgesetzt)

| Schichtnummer | Zusammensetzung | Anteil in Schicht in % | Dicke in $\mu$m |
|---|---|---|---|
| | | | Summe: 100 $\mu$m |

**Beispiel B12:** Wie Beispiel 11 nur mit dem Unterschied, dass die für die Harzhaftung vorgesehene Seite einer Corona-Behandlung unterzogen wurde, was zu einer Oberflächenspannung von 48 mN/m führte.

**Beispiel B13:** Flachfolie, 100 $\mu$m, normales PE mit POP in der Schicht 1:

| Schichtnummer | Zusammensetzung | Anteil in Schicht in % | Dicke in $\mu$m |
|---|---|---|---|
| 1 zum Harz | • Lupolen 3010 D<br>• Exact 0201 | • 99<br>• 1 | 30 |
| 2 | Admer NF498E | 100 | 10 |
| 3 | Durethan C38 F | 100 | 20 |
| 4 | Admer NF498E | 100 | 10 |
| 5 | Lupolen 3010 D | 100 | 30 |
| | | | Summe: 100 $\mu$m |

**Beispiel B14:** Wie Beispiel 13 nur mit dem Unterschied, dass die für die Harzhaftung vorgesehene Seite einer Corona-Behandlung unterzogen wurde, was zu einer Oberflächenspannung von 48 mN/m führte.

**Beispiel B15:** Flachfolie, 100 $\mu$m, normales PE mit POP in der Schicht 1:

| Schichtnummer | Zusammensetzung | Anteil in Schicht in % | Dicke in $\mu$m |
|---|---|---|---|
| 1 zum Harz | • Lupolen 3010 D<br>• Affinity PL 1850 G | • 30<br>• 70 | 35 |
| 2 | Lupolen 3010D | 30 | 30 |
| 3 | Lupolen 3010 D | 30 | 35 |
| | | | Summe: 100 $\mu$m |

**Beispiel B16:** Flachfolie, 100 $\mu$m, heterophasiges Polypropylen-Copolymer mit POP in der Schicht 1:

| Schichtnummer | Zusammensetzung | Anteil in Schicht in % | Dicke in $\mu$m |
|---|---|---|---|
| 1 zum Harz | • Moplen EP 240 H<br>• Exact 0201 | • 30<br>• 70 | 30 |
| 2 | Admer NF 498 E | 100 | 10 |
| 3 | Durethan C38 F | 100 | 20 |
| 4 | Admer QB 510 E | 100 | 10 |
| 5 | Moplen EP 240 H | 100 | 30 |
| | | | Summe: 100 $\mu$m |

**Beispiel B17:** Flachfolie, 100 $\mu$m, normales PE mit POP in der Schicht 1:

| Schichtnummer | Zusammensetzung | Anteil in Schicht in % | Dicke in $\mu$m |
|---|---|---|---|
| 1 zum Harz | • Lupolen 2420 F<br>• Exact 0201 | • 20<br>• 80 | 30 |
| 2 | Admer NF498E | 100 | 10 |

(fortgesetzt)

| Schichtnummer | Zusammensetzung | Anteil in Schicht in % | Dicke in $\mu$m |
|---|---|---|---|
| 3 | Durethan C38 F | 100 | 20 |
| 4 | Admer NF498E | 100 | 10 |
| 5 | • Lupolen 2420 F<br>• Elvax 3165 | • 80<br>• 20 | 30 |
| | | | Summe: 100 $\mu$m |

## IV. Bestimmung der Harzhaftung

Eine in Form eines Din A4-Blatts vorliegende Folie (Format 210 mm x 297 mm) wird in eine rechteckige Metallwanne mit den Abmessungen Länge 250 mm, Breite 220 mm und Höhe 10 mm passend eingelegt, an drei Stellen mit einem Klebeband in der Wanne befestigt (einmal komplett in der Breite, zweimal komplett in der Länge), so dass noch ca. 5 cm an Folie an einer Breitseite überstehen können und aus der Wanne ragen.

In die Wanne mit Folie wird o.g. Harzrezeptur inklusive 0,5 Gew.-% Fotoinitiator auf die Folie gegossen, so dass das Harz die Wanne etwa zur Hälfte füllt (ca. 275 ml). Die Folie ist somit vollständig - bis auf den Teil der Folie, der aus der Wanne ragt - mit Harz bedeckt. Das Harz kann bei dieser Versuchsanordnung nicht unter die Folie in der Wanne gelangen, da diese mit Klebeband von oben abgedichtet wurde.

Anschließend wird durch eine 10-minütige Bestrahlung mittels einer UV-Lampe das Harz zur vollständigen Härtung auf der Folie gebracht, deren dem Harz zugewandte Seite durch die Wärme aktiviert wird. Durch die exotherme Polymerisationsreaktion des Harzes können bei diesem Versuch Temperaturen von ca. 100 bis 130 °C auftreten.

Die Folie wird danach mittels "Abzugslasche", die aus der Wanne ragt, aus der Wanne gezogen. Man erhält somit die Folie, die nahezu komplett mit ausgehärtetem Harz bedeckt ist.

Zur Bestimmung der Harzhaftung wird die Folie anschließend per Hand vom Harz abgezogen. Die Beurteilung erfolgt mit einem Schulnotensystem, wobei die Note 1 bedeutet: Folie ist untrennbar mit dem Harz verbunden und kann zerstörungsfrei nicht abgezogen werden. Die Note 6 bedeutet: Folie löst sich sehr leicht vom Harz.

Die mit obiger Versuchsanordnung erhaltenen Ergebnisse werden mit folgendem Test unter Verwendung folgender Versuchsanordnung nochmals nachgemessen: Ein Metallring mit 5 cm Innen-Durchmesser und ca. 3 cm Höhe wird auf die Außenseite der Folie gestellt, d.h. diejenige Seite, die im Rahmen dieser Erfindung für Harzhaftung vorgesehen ist. In diesen Metallring gießt man das Harz so, dass dieses eine Höhe von ca. 5 mm am Rand des Metallrings erreicht. Anschließend wird mit einer UV-Lampe das Harz vollständig ausgehärtet. Die Verbindung zum Harz wird nun festgestellt, indem der Metallring zunächst entfernt wird und das Harz anschließend von der Folie gezogen wird. Ist das Harz vollständig mit der Folie verbunden, gelingt dies nicht zerstörungsfrei. Auch in diesem Fall gilt oben genanntes Schulnotensystem, um die Harzhaftung zu quantifizieren.

## V. Ergebnisse

In allen Fällen wurde mit dem ersten Versuchsaufbau das gleiche Ergebnis gefunden wie mit dem zweiten Versuchsaufbau. Daher wird nachfolgend nur jeweils eine Beobachtung für die Harzhaftung bzw. nur eine Schulnote angegeben.

| Vergleichsbeispiel / Beispiel | Harzhaftung, Schulnote | Harzhaftung |
|---|---|---|
| V1 | 6 | ungenügend |
| V2 | 6 | ungenügend |
| V3 | 6 | ungenügend |
| V4 | 6 | ungenügend |
| V5 | 6 | ungenügend |
| V6 bis V10 | 6 | ungenügend |
| B1 | 1 | sehr gut |
| B2 | 1 | sehr gut |

(fortgesetzt)

| Vergleichsbeispiel / Beispiel | Harzhaftung, Schulnote | Harzhaftung |
|---|---|---|
| B3 | 2 | gut |
| B4 | 1 | sehr gut |
| B5 | 1 | sehr gut |
| B6 | 1 | sehr gut |
| B7 | 1 | sehr gut |
| B8 | 1 | sehr gut |
| B9 | 3 | befriedigend |
| B10 | 2 | gut |
| B11 | 4 | ausreichend |
| B12 | 2 | gut |
| B13 | 6 | ungenügend |
| B14 | 4 | ausreichend |
| B15 | 1 | sehr gut |
| B16 | 1 | sehr gut |
| B17 | 1 | sehr gut |

Interpretation der Ergebnisse:

Bei den Folien aus den Vergleichsbeispielen V1 bis V5 konnte mit für die Blasfolienherstellung üblichen Materialien wie LDPE (Lupolen 2420 F in der Harz-zugewandten Schicht 1) oder PP (Inspire 137 in der Harz-zugewandten Schicht 1) keinerlei Haftung zum ausgehärteten Harz erzielt werden. Das gelang auch nicht mit einer Mischung von LDPE und Metallocen-LLDPE in der Harz-zugewandten Schicht 1 (Vergleichsbeispiel V5).

Daran änderte sich bei den Vergleichsbeispielen V1 bis V5 auch dadurch nichts, dass die Seiten, die sich mit dem Harz verbinden sollten, einer Corona-Vorbehandlung zu einer Oberflächenspannung von 48 mN/m unterzogen wurden. Die Haftung zum Harz blieb stets ungenügend (Vergleichsbeispiele V6 bis V10).

Wird hingegen ein Polyolefin-Plastomer (POP) in der sich mit dem ausgehärteten Harz zu verbindenden Seite eingesetzt, so verbindet sich die Folie sehr gut mit dem Harz nach dessen Härtung und kann vom Harz nicht mehr zerstörungsfrei getrennt werden. Das zeigen die Beispiele B1 (80 % POP, hier: Exact 0201) und B2 (100 % POP, hier: Exact 0201) sehr eindrucksvoll.

Im Beispiel B3 wurde das POP in der sich mit dem ausgehärteten Harz zu verbindenden Folienseite auf 50 % verringert: Es findet sich immer noch eine gute Harzhaftung (Schulnote 2).

Beispiel 4 zeigt, dass die Harzhaftung offenbar mit jeglichem POP erreicht werden kann. In diesem Fall wurde ein POP der Firma The Dow Chemical Company verwendet, während beim analogen Beispiel 1 ein POP der Firma Borealis verwendet wurde. Auch bei Beispiel B4 fand sich eine hervorragende Haftung zum Harz (Note 1).

Auch der Vergleich der Beispiele B5 (POP: Exact 0210) und B6 (POP: Affinity 1850 G), bei denen sich die Folien nur vom Material des verwendeten POP in der sich mit ausgehärtetem Harz zu verbindenden Seite unterscheiden, belegt, dass sich der Effekt der Harzhaftung generell mit anscheinend allen POP Materialien erzielen lässt. Beide Folien aus den Beispielen B5 und B6 wiesen hervorragende Haftung zum ausgehärteten Harz auf.

Dass es bei der Harzhaftung allein auf die äußere Schicht mit dem POP ankommt, beweisen die Beispiele B7 und B8. Wie zu erwarten war, spielt die Änderung einer oder mehrerer innerer Schichten (hier Einsatz von EVOH bei Beispiel 7 anstelle von Polyamid im Beispiel B6, sowie Einsatz von PA und EVOH im Beispiel B8) keine Rolle in Bezug auf die Harzhaftung, die hier in beiden Fällen wieder hervorragend ist (Note 1).

Bei den Beispielen B9 bis B11 sowie B13, zum Vergleich auch die Beispiele B1 (hier aber mit LDPE Lupolen 2420 F, anstatt mit LDPE Lupolen 3010 D wie bei allen anderen in diesem Vergleich genannten Beispielen B9-B11 und B13), B2, B3 und B5, wurde das Mischungsverhältnis in der sich mit dem Harz zu verbindenden Schicht zwischen einem LDPE und einem POP variiert, ansonsten waren die Folien jeweils analog aufgebaut. Es fanden sich folgende Ergebnisse in Bezug auf Haftung der Folie zum ausgehärteten Harz (gleiche Ergebnisse wie oben, hier aber lediglich Mischungsverhältnisse angegeben):

| Beispiel | Mischungsverhältnis LDPE / POP in Schicht zur Harzhaftung (Schicht 1) | Harzhaftung (Schulnote) |
|---|---|---|
| B2 | 0/100 | 1 |
| B1 | 20/80 | 1 |
| B5 | 30/70 | 1 |
| B3 | 50/50 | 2 |
| B10 | 60/40 | 2 |
| B9 | 70/30 | 3 |
| B11 | 90/10 | 4 |
| B13 | 99/1 | 6 |

Diese Tabelle zeigt, dass mit abnehmendem Gehalt an POP in der Schicht, die sich später mit dem ausgehärteten Harz verbinden soll, auch sukzessive die Harzhaftung verringert.

So findet sich bei den Beispielen B9, B11 und B13 nur eine befriedigende, ausreichende bzw. ungenügende Haftung der Folie mit dem ausgehärteten Harz.

Überraschenderweise wurde allerdings gefunden, dass auch eine geringe Menge an POP in der sich mit dem Harz zu verbindenden Schicht genügt, um durch eine Corona-Vorbehandlung dieser Schicht doch noch eine merklich bessere Harzhaftung zu erreichen. So führte bei Beispiel B11 (unvorbehandelt: ausreichende Harzhaftung, Schulnote 4) die Corona-Behandlung zu einer guten Haftung zum Harz (Beispiel B12, Schulnote: 2). Beim Beispiel B13 (unvorbehandelt: ungenügende Harzhaftung, Schulnote 6) führte die Coronabehandlung zu einer immerhin noch ausreichenden Haftung zum Harz (Beispiel B14, Schulnote: 4).

Der Vergleich mit den Vergleichsbeispielen V1 bis V5 zeigt allerdings, dass die Harzhaftung durch eine Corona-Behandlung nicht verbessert werden kann (V6 bis V10), wenn sich in der sich mit dem Harz zu verbindenden Schicht kein POP befindet.

Der Einsatz der Barrierematerialien PA und EVOH hatte bei den Beispielen und Vergleichsbeispielen zweierlei Bedeutung: Einerseits bietet zum Beispiel Polyamid eine hervorragende Barriere gegen die im noch nicht gehärteten Harz befindlichen Monomere und Öle, wobei hierdurch ein unangenehmer Geruch verhindert wird. Andererseits bedingt Polyamid auch deutlich verbesserte mechanische Eigenschaften der Folie. Gute mechanische Eigenschaften der Folie waren vorliegend gefragt, da beim Versuch, jeweils die Folien vom ausgehärteten Harz abzuziehen, sehr große Kräfte aufgewendet werden mussten. Die Folien sollten diese mechanische Belastung auch bei Einwirkung von größeren Zugkräften aushalten, damit allein die Haftung zum gehärteten Harz festgestellt werden konnte. Daher waren die Folien mit einer Dicke von jeweils 100 μm auch relativ dick gewählt.

Es soll hier angemerkt werden, dass selbstverständlich auch Folien ohne zusätzliche Polymere wie Polyamid oder EVOH eine hervorragende Haftung zum ausgehärteten Harz aufweisen, wenn in der sich mit dem Harz zu verbindenden Schicht POP verwendet wird. Dies zeigt Beispiel B15.

Der Effekt der besseren Harzhaftung stellt sich dabei nicht nur bei einer Mischung von PE mit POP ein, sondern auch bei einer Mischung von Polypropylen (PP) mit POP. Das geht aus dem Beispiel 16 (3-Schichtfolie) hervor.

Damit kann im Prinzip jedes andere Polymer auch mit POP kombiniert werden, um eine bessere Haftung einer Folie, auf die ein Harz ausgehärtet wird, zu erzielen.

Zu guter Letzt zeigte die Folie aus Beispiel 17 eine besonders gute Verbindung der Außenseite (1) mit der Außenseite (5) (entsprechend den Überlappungsbereichen 9 in Fig. 2) und zwar schon bei einer Temperatur von 80°C. Die Harzhaftung der Außenseite (1) ist dabei ebenfalls sehr gut. Diese Folie eignet sich daher bestens zum spiralförmigen Umwickeln der Harzschicht eines Schlauchliners, da sie aufgrund der sehr guten Verbindung der sich überlappenden Ränder eine besonders hohe Dichtigkeit aufweist.

**Patentansprüche**

1. Anordnung (2, 4; 7, 4; 2, 7, 4) mit einer oder zwei Folien (2; 7; 2, 7) und mit einer Harzschicht auf einer der beiden Seiten der besagten Folie (2; 7) oder unmittelbar zwischen zwei besagten Folien (2, 7), wobei die besagte Folie (2; 7) bzw. die besagten Folien (2, 7) mindestens eine Schicht mit mindestens einem Polyolefin-Plastomer (POP) aufweisen, wobei das Harz (4) der Harzschicht im ausgehärteten Zustand dauerhaft und unmittelbar und unter Verzicht auf ein auf die besagte Folie (2; 7) bzw. die besagten Folien (2, 7) aufkaschiertes, für Harz saugfähiges Material, insbesondere ein Vlies, an dieser Schicht haftet und im ausgehärteten Zustand fest mit der besagten Folie (2; 7) bzw. den besagten Folien (2, 7) verbunden ist.

2. Anordnung nach Anspruch 1, **dadurch gekennzeichnet, dass** das mindestens eine Polyolefin-Plastomer mit mehr als 30 Gew.-% in der besagten mindestens einen Schicht enthalten ist, bevorzugt mit mehr als 40 Gew.-% und besonders bevorzugt mit mehr als 50 Gew.-% in der besagten mindestens einen Schicht enthalten ist.

3. Anordnung nach einem oder mehreren der vorhergehenden Ansprüche, **dadurch gekennzeichnet, dass** in der besagten mindestens einen Schicht oder in mindestens einer weiteren Schicht mindestens ein weiteres Polymer enthalten ist, welches vorzugsweise aus der folgenden Gruppe stammt, wobei der Anteil des oder der weiteren Polymere insgesamt bis zu 99,9 Gew.-% betragen kann:

   - Olefin-Homo- oder Copolymere, insbesondere Polyethylen (PE) oder Polypropylen (PP);
   - Polyamide (PA);
   - Amorphe Thermoplaste, wie z.B. Polystyrol (PS) und Polyvinylchlorid (PVC);
   - Polyester, vorzugsweise Polyethylenterephthalat (PET);
   - Polyurethane;
   - Acryl-Ester-Polymere und -Copolymere;
   - Styrol-Acrylnitril;
   - Polyvinylester wie Polyvinylacetat;
   - Polyvinylacetale;
   - Polyvinylalkohole;
   - Polyether;
   - Polycarbonate
   - Polyhydroxyalkanoate;
   - Polysaccharide, Cellulose, Stärke;
   - Copolymere der oben aufgelisteten Verbindungen.

4. Anordnung nach einem oder mehreren der vorhergehenden Ansprüche, **dadurch gekennzeichnet, dass** die dem Harz (4) zugewandte Folienseite zur Erhöhung der Oberflächenspannung vorbehandelt ist, vorzugsweise durch Corona-, Plasma- und/oder Flamm-Vorbehandlung.

5. Anordnung nach einem oder mehreren der vorhergehenden Ansprüche, **dadurch gekennzeichnet, dass** die Folie im Wesentlichen durchlässig für UV-Licht ist, damit UV-Licht das auf der Folie aufgetragene Harz (4) auszuhärten vermag oder dass die Folie im Wesentlichen undurchlässig für UV-Licht ist, damit das auf der Folie aufgetragene Harz (4) jedenfalls von der lichtundurchlässigen Seite nicht ausgehärtet wird.

6. Anordnung nach einem oder mehreren der vorhergehenden Ansprüche, **dadurch gekennzeichnet, dass** die Folie wenigstens eine eigenständige Barriereschicht, beispielsweise Polyamid (PA) mit bis zu 100% Gew.-% enthaltend, gegen Monomere wie beispielsweise Styrol aufweist, und/oder eine Gasbarriere, beispielsweise EVOH mit bis zu 100 Gew.-% enthaltend, und/oder eine Wasserdampfbarriereschicht mit Cyclo-Olefin-Copolymer (COC).

7. Anordnung nach einem oder mehreren der vorhergehenden Ansprüche, **dadurch gekennzeichnet, dass** die Folie mindestens eine eigenständige Schicht aufweist, die ein thermoplastisches Olefin-Homo- oder Copolymer enthält, vorteilhafterweise zu mehr als 50 Gew.-%, bevorzugt zu mehr als 75 Gew.-%, und besonders bevorzugt zu mehr als 95 Gew.-%.

8. Anordnung nach einem oder mehreren der vorhergehenden Ansprüche, **dadurch gekennzeichnet, dass** das Harz (4) durch Aktivierung der Folie auf der dem Harz zugewandten Folienseite unterhalb einer Temperatur von 130 °C, vorzugsweise unterhalb von 100 °C direkt mit der POP enthaltenden Schicht verbunden ist.

9. Anordnung nach einem oder mehreren der vorhergehenden Ansprüche, wobei die besagte Folie insbesondere in Form einer Flachfolie vorliegt, **dadurch gekennzeichnet, dass** eine der POP enthaltenden Schicht abgewandte Außenschicht vorhanden ist, die derart ausgebildet ist, dass ihr Schmelzpunkt bei einer Temperatur zwischen 50°C und 130°C, vorzugsweise zwischen 65°C und 100°C, und besonders bevorzugt zwischen 65°C und 90°C liegt, wobei dieser Schmelzpunkt vorzugsweise durch Zugabe von einem oder mehreren der nachfolgenden Verbindungen, bevorzugt zusätzlich zu einem Polyolefin-Homo- oder Copolymer, insbesondere einem LDPE, erhalten wird:

- (weitere) Polyolefin-Homo- oder Copolymere;
- Polyvinylacetat Homo- oder Copolymere;
- (Meth)Acrylsäureester Homo- oder Copolymere;
- Polyether;
- Ionomere;
- Polyvinylacetale;
- Polyurethane;
- Copolymere der oben aufgelisteten Verbindungen, wie Ethylenvinylacetat-Copolymere (EVA oder EVAc).

10. Anordnung nach einem oder mehreren der vorhergehenden Ansprüche, **dadurch gekennzeichnet, dass** die besagte Schicht, an welcher das Harz (4) haftet, eine Dicke von 1 bis 500 $\mu$m, bevorzugt von 5 bis 200 $\mu$m, besonders bevorzugt von 10 bis 100 $\mu$m und am meisten bevorzugt von 15 $\mu$m bis 80 $\mu$m aufweist.

11. Anordnung nach einem oder mehreren der vorhergehenden Ansprüche, **dadurch gekennzeichnet, dass** die Folie eine Gesamtdicke von 20 bis 1000 $\mu$m, bevorzugt von 40 bis 400 $\mu$m, insbesondere von 50 bis 250 $\mu$m aufweist.

12. Anordnung nach einem oder mehreren der vorhergehenden Ansprüche, **dadurch gekennzeichnet, dass** das Harz (4) mit bzw. in einem Trägermaterial (5) vorliegt.

13. Anordnung nach einem oder mehreren der vorhergehenden Ansprüche, **dadurch gekennzeichnet, dass** das noch nicht ausgehärtete Harz (4) keine feste Verbindung mit der bzw. den Folien (2; 7; 2, 7) aufweist, und wobei das ausgehärtete Harz (4) direkt und fest an der das mindestens ein Polyolefin-Plastomer (POP) enthaltenden Schicht der Folie (2; 7) bzw. der Folien (2, 7) haftet.

14. Schlauchliner, eingerichtet zum Einsatz bei der grabenlosen Kanalsanierung, **dadurch gekennzeichnet, dass** der Schlauchliner (1) mindestens eine Anordnung (2, 4; 7, 4; 2, 7, 4) nach einem oder mehreren der vorherigen Ansprüche aufweist.

15. Verwendung der Anordnung (2, 4; 7, 4; 2, 7, 4) nach einem oder mehreren der vorherigen Ansprüche bei der grabenlosen Kanalrohrsanierung, wobei die besagte Anordnung (2, 4; 2, 7; 2, 7, 4) eingesetzt wird als:

- Anordnung, bei der die besagte Folie als Schlauchinnenfolie (2) ausgebildet ist, wobei die dem Harz (4) zugewandte Folienseite der Schlauchinnenfolie (2) näher an der Kanalrohrachse und das aufgetragene (4) Harz näher an der Kanalrohrwand angeordnet ist, wobei die Schlauchinnenfolie (2) nach dem Aushärten des Harzes (4) vorzugsweise im Kanal (K) verbleibt, und wobei die Schlauchinnenfolie (2) vorteilhafterweise zumindest teilweise für UV-Strahlung durchlässig ist;
- Anordnung, bei der die besagte Folie als Außenfolie oder Schlauchaußenfolie ausgebildet ist, die im eingebauten Zustand das Harz von außen umgibt, und wobei die Schlauchaußenfolie vorteilhafterweise UV-Strahlung absorbiert und/oder reflektiert;
- Anordnung, bei der die besagte Folie als Außenfolie, insbesondere innere Außenfolie (7), in Form einer Flachfolie ausgebildet ist, die von außen spiralförmig und mit randseitigen Überlappungsbereichen (9) um das Harz (4) gewickelt wird, wobei sich die randseitigen Überlappungsbereiche (9) der besagten, insbesondere inneren, Außenfolie (7) klebend verbinden, insbesondere durch Schmelzen der dem Harz (4) abgewandten Außenschicht bei einer Temperatur zwischen 50°C und 130°C, vorzugsweise zwischen 65°C und 100°C und besonders bevorzugt zwischen 65°C und 90°C, und wobei sich die beiden Außenschichten der Außenfolie (7), nämlich die besagte schmelzfähige Außenschicht und die dem Harz (4) zugewandte Außenschicht, thermisch verbinden, insbesondere im Zuge der exothermen Aushärtung des Harzes (4);
- Anordnung, bei der die besagte Folie als Preliner (10), d.h. Gleitschlauch, ausgebildet ist, der an der Kanalrohrwand zur Anlage kommt;
- Anordnung, bei der die besagte Folie als Gleitfolie ausgebildet ist, welche am unteren Bereich der Kanalrohrwand zur Anlage kommt;
- Kalibrierschlauch; und/oder
- Anordnung, bei die besagte Folie als Schutzfolie ausgebildet ist, die unmittelbar an der Harzschicht eines Schlauchliners anliegt.

16. Verwendung der Anordnung nach einem oder mehreren der vorherigen Ansprüche zum Einsatz bei GFK-Anwendungen, im Schiffsbau, im Flugzeugbau, im Prepreg-Bereich (preimpregnated fibers, vorimprägnierte Fasern), bei der Laminatherstellung mit aushärtenden Harzen, für die innere und äußere Auskleidung von aus mit Harzen und Trägermaterialien geformten Behältern und Tanks und bei der Oberflächenausrüstung von Harzen.

**Claims**

1.  Arrangement (2, 4; 7, 4; 2, 7, 4) comprising one or two films (2; 7; 2, 7) and having a resin layer on one of the two sides of said film (2; 7) or directly between the two said films (2, 7), wherein said film (2; 7) or said films (2, 7) comprise at least one layer comprising at least one polyolefin plastomer (POP), wherein the resin (4) of the resin layer in the cured state permanently and directly adheres to said layer without the use of a resin-absorbent material, in particular a nonwoven fabric, laminated to said film (2; 7) or films (2, 7), and in the cured state is firmly bonded to said film (2; 7) or films (2, 7).

2.  Arrangement according to claim 1, **characterized in that** the at least one polyolefin plastomer is contained in said at least one layer with more than 30 wt.%, is contained in said at least one layer preferably with more than 40 wt.% and particularly preferably with more than 50 wt.%.

3.  Arrangement according to one or more of the preceding claims, **characterized in that** said at least one layer or at least one further layer contains at least one further polymer which preferably originates from the following group, wherein the proportion of the further polymer or polymers in total can be up to 99.9 wt.%:

    - olefin homo- or copolymers, in particular polyethylene (PE) or polypropylene (PP);
    - polyamides (PA);
    - amorphous thermoplastics such as polystyrene (PS) and polyvinylchloride (PVC);
    - polyester, preferably polyethylene terephthalate (PET);
    - polyurethanes;
    - acrylic ester polymers and copolymers;
    - styrene-acrylonitrile;
    - polyvinyl esters such as polyvinyl acetate;
    - polyvinyl acetals;
    - polyvinyl alcohols;
    - polyethers;
    - polycarbonates;
    - polyhydroxyalkanoates;
    - polysaccharides, cellulose, starch;
    - copolymers of the compounds listed above.

4.  Arrangement according to one or more of the preceding claims, **characterized in that** the film side facing the resin (4) is pre-treated to increase the surface tension, preferably by corona, plasma and/or flame pre-treatment.

5.  Arrangement according to one or more of the preceding claims, **characterized in that** the film is substantially permeable for UV light, so that UV light may cure the resin (4) applied to the film or that the film is substantially impermeable for UV light so that the resin (4) applied to the film is not in any case cured from the opaque side.

6.  Arrangement according to one or more of the preceding claims, **characterized in that** the film has at least one independent barrier layer containing, for example, polyamide (PA) with up to 100 wt.%, against monomers such as styrene, and/or a gas barrier containing, for example, EVOH with up to 100 wt.% and/or a water vapour barrier layer with cyclo-olefin copolymer (COC).

7.  Arrangement according to one or more of the preceding claims, **characterized in that** the film comprises at least one independent layer containing a thermoplastic olefin homo- or copolymer, advantageously with more than 50 wt.%, preferably with more than 75 wt.%, and particularly preferably with more than 95 wt.%.

8.  Arrangement according to one or more of the preceding claims, **characterized in that** the resin (4) is directly bonded to the layer containing POP by activation of the film on the film side facing the resin below a temperature of 130°C, preferably below 100°C.

9.  Arrangement according to one or more of the preceding claims, wherein said film is present in particular in the form of a flat film, **characterized in that** there is an outer layer facing away from the layer containing POP, configured so that its melting point is at a temperature between 50°C and 130°C, preferably between 65°C and 100°C, and more preferably between 65°C and 90°C, wherein this melting point preferably is obtained by adding one or more of the following compounds, preferably in addition to a polyolefin homo- or copolymer, in particular an LDPE:

- (further) polyolefin homo- or copolymers;
- polyvinyl acetate homo- or copolymers;
- (meth)acrylic acid esters homo- or copolymers;
- polyethers;
- ionomers;
- polyvinylacetals;
- polyurethanes;
- copolymers of the compounds listed above, such as ethylenvinylacetate copolymers (EVA or EVAc).

10. Arrangement according to one or more of the preceding claims, **characterized in that** said layer to which the resin (4) adheres has a thickness ranging from 1 to 500 μm, preferably from 5 to 200 μm, more preferably from 10 to 100 μm and most preferably from 15 μm to 80 μm.

11. Arrangement according to one or more of the preceding claims, **characterized in that** the film has a total thickness of 20 to 1000 μm, preferably of 40 to 400 μm, in particular of 50 to 250 μm.

12. Arrangement according to one or more of the preceding claims, **characterized in that** the resin (4) is present with or in a carrier material (5).

13. Arrangement according to one or more of the preceding claims, **characterized in that** the resin (4) which has not yet cured has no solid bond with the film(s) (2; 7; 2, 7), and wherein the cured resin (4) adheres directly and firmly to the layer containing the at least one polyolefin plastomer (POP) of the film (2; 7) or films (2, 7).

14. Pipe liner adapted for use in trenchless sewer rehabilitation, **characterized in that** the pipe liner (1) comprises at least one arrangement (2, 4; 7, 4; 2, 7, 4) according to one or more of the preceding claims.

15. Use of an arrangement (2, 4; 7, 4; 2, 7, 4) according to one or more of the preceding claims in trenchless sewer pipe rehabilitation, said arrangement (2, 4; 2, 7; 2, 7, 4) being used as:

- an arrangement in which said film is formed as a tubular inner film (2), wherein the film side of the tubular inner film (2) facing the resin (4) is arranged closer to the sewer pipe axis and the resin (4) is arranged closer to the sewer pipe wall, wherein after curing of the resin (4) the tubular inner film (2) preferably remains in the sewer (K) and wherein the tubular inner film (2) is advantageously at least partially transparent to UV radiation;
- an arrangement in which said film is formed as an outer film or tubular outer film which in the installed state surrounds the resin from the outside, and wherein the tubular outer film advantageously absorbs and/or reflects UV radiation;
- an arrangement in which said film is formed as an outer film, in particular an inner outer film (7), in the form of a flat film which is wound spirally and with edge-side overlapping regions (9) from the outside around the resin (4), wherein the edge-side overlapping regions (9) of said outer film (7), in particular said inner outer film (7), adhesively bond, in particular by melting the outer layer remote from the resin (4) at a temperature between 50°C and 130°C, preferably between 65°C and 100°C and particularly preferably between 65°C and 90°C, and wherein the two outer layers of the outer film (7), namely said meltable outer layer and the outer layer facing the resin (4), thermally bond, in particular in the course of the exothermic curing of the resin (4);
- an arrangement in which said film is formed as a preliner (10), i.e. a sliding hose, which comes into contact with the sewer pipe wall;
- an arrangement in which said film is formed as a sliding film which comes into contact with the lower part of the sewer pipe wall; calibration hose; and/or
- an arrangement in which said film is formed as a protective film directly abutting the resin layer of a pipe liner.

16. Use of an arrangement according to one or more of the preceding claims for use in GRP applications, in shipbuilding, in aircraft construction, in the prepreg (preimpregnated fibers) area, in the manufacture of laminates with curing resins, for the inner and outer lining of containers and tanks formed from resins and carrier materials and for the surface finishing of resins.

**Revendications**

1. Arrangement (2, 4 ; 7, 4 ; 2, 7, 4) avec une ou deux feuilles (2 ; 7 ; 2, 7) et avec une couche de résine sur l'une des deux faces de ladite feuille (2 ; 7) ou directement entre deux desdites feuilles (2, 7), dans lequel ladite feuille (2 ; 7) ou lesdites feuilles (2, 7) présente(nt) au moins une couche avec au moins un plastomère polyoléfine (POP), dans lequel la résine (4) de la couche de résine, à l'état durci, est collée en permanence et directement sur ladite couche sans utilisation d'un matériau contrecollé sur ladite feuille (2 ; 7) ou lesdites feuilles (2, 7), absorbant pour la résine, en particulier un non-tissé, et, à l'état durci, est relié rigidement avec ladite feuille (2 ; 7) ou lesdites feuilles (2, 7).

2. Arrangement selon la revendication 1, **caractérisé en ce que** l'au moins un plastomère polyoléfine est contenu dans ladite au moins une couche à plus de 30 % en poids, de préférence à plus de 40 % en poids, et de manière particulièrement préférée, à plus de 50 % en poids.

3. Arrangement selon l'une ou plusieurs des revendications précédentes, **caractérisé en ce qu'**un polymère supplémentaire au moins est contenu dans ladite au moins une couche ou dans au moins une couche supplémentaire, lequel polymère provient de préférence du groupe suivant, sachant que la part du ou des polymère(s) supplémentaire(s) peut être au total de 99,9 % en poids :

   - homopolymères ou copolymères d'oléfine, en particulier polyéthylène (PE) ou polypropylène (PP) ;
   - polyamides (PA) ;
   - thermoplastiques amorphes, tels que, par exemple, polystyrène (PS) et chlorure de polyvinyle (CPV) ;
   - polyesters, de préférence polytéréphtalate d'éthylène (PET) ;
   - polyuréthanes ;
   - polymères et copolymères d'ester acrylique ;
   - styrène-acrylonitrile :
   - polyesters de vinyle tels que l'acétate de polyvinyle ;
   - acétals de polyvinyle ;
   - alcools polyvinyliques ;
   - polyéthers ;
   - polycarbonates ;
   - polyhydroxyalcanoates ;
   - polysaccharides, cellulose, amidon ;
   - copolymères des composés ci-dessus énumérés.

4. Arrangement selon l'une ou plusieurs des revendications précédentes, **caractérisé en ce que** la face de la feuille orientée vers la résine (4) est prétraitée pour augmenter la tension superficielle, de préférence par prétraitement corona, au plasma et/ou à la flamme.

5. Arrangement selon l'une ou plusieurs des revendications précédentes, **caractérisé en ce que** la feuille est essentiellement perméable à la lumière UV afin que la lumière UV puisse durcir la résine (4) appliquée sur la feuille ou que la feuille est essentiellement imperméable à la lumière UV afin que la résine (4) appliquée sur la feuille ne soit en tout cas pas durcie par la face imperméable à la lumière.

6. Arrangement selon l'une ou plusieurs des revendications précédentes, **caractérisé en ce que** la feuille présente au moins une couche barrière autonome, contenant par exemple du polyamide (PA) en une quantité de jusqu'à 100 % en poids, contre les monomères tels que, par exemple, le styrène, et/ou une barrière de gaz, contenant par exemple de l'EVOH en une quantité de jusqu'à 100 % en poids, et/ou une couche de barrière à la vapeur d'eau avec copolymère de cyclooléfine (COC).

7. Arrangement selon l'une ou plusieurs des revendications précédentes, **caractérisé en ce que** la feuille présente au moins une couche autonome qui contient un homopolymère ou un copolymère d'oléfine thermoplastique, avantageusement en une quantité supérieure à 50 % en poids, de préférence en une quantité supérieure à 75 % en poids, et, de manière particulièrement préférée, en une quantité supérieure à 95 % en poids.

8. Arrangement selon l'une ou plusieurs des revendications précédentes, **caractérisé en ce que** la résine (4) est directement liée à la couche contenant le POP par activation de la feuille sur la face de la feuille orientée vers la résine à une température inférieure à 130 °C, de préférence inférieure à 100°C.

9. Arrangement selon l'une ou plusieurs des revendications précédentes, dans lequel ladite feuille se présente en particulier sous la forme d'une feuille plate, **caractérisé en ce qu'**une couche extérieure opposée à la couche contenant le POP est présente, laquelle couche extérieure se présente sous une forme telle que son point de fusion se situe à une température comprise entre 50 °C et 130 °C, de préférence entre 65 °C et 100 °C, et de manière particulièrement préférée, entre 65 °C et 90 °C, sachant que ce point de fusion est obtenu de préférence par addition de l'un ou de plusieurs des composés suivants, de préférence en plus d'un homopolymère ou d'un copolymère polyoléfinique, en particulier un LDPE :

- homopolymères ou copolymères polyoléfiniques (supplémentaires) ;
- homopolymères ou copolymères d'acétate de polyvinyle ;
- homopolymères ou copolymères d'ester d'acide (méth)acrylique ;
- polyéthers ;
- ionomères ;
- acétals de polyvinyle ;
- polyuréthanes ;
- copolymères des composés ci-dessus énumérés, tels que les copolymères d'éthylène-acétate de vinyle (EVA ou EVAc).

10. Arrangement selon l'une ou plusieurs des revendications précédentes, **caractérisé en ce que** ladite couche, à laquelle adhère la résine (4), présente une épaisseur de 1 à 500 $\mu$m, de préférence, de 5 à 200 $\mu$m, de manière particulièrement préférée, de 10 à 100 $\mu$m, et de manière la plus préférée, de 15 à 80 $\mu$m.

11. Arrangement selon l'une ou plusieurs des revendications précédentes, **caractérisé en ce que** ladite feuille présente une épaisseur totale de 20 à 1 000 $\mu$m, de préférence, de 40 à 400 $\mu$m, en particulier de 50 à 250 $\mu$m.

12. Arrangement selon l'une ou plusieurs des revendications précédentes, **caractérisé en ce que** la résine (4) est présente avec ou dans un matériau support (5).

13. Arrangement selon l'une ou plusieurs des revendications précédentes, **caractérisé en ce que** la résine (4) qui n'a pas encore durci n'a pas de liaison fixe avec le ou les feuilles (2 ; 7 ; 2, 7), et sachant que la résine (4) durcie adhère directement et fermement à la couche de la feuille (2 ; 7) ou des feuilles (2, 7) contenant l'au moins un plastomère polyoléfine (POP).

14. Gaine de chemisage de tuyaux, adaptée pour l'utilisation dans la réhabilitation de canalisations sans tranchée, **caractérisée en ce que** la gaine de chemisage de tuyaux (1) comprend au moins un arrangement (2, 4 ; 7, 4 ; 2, 7, 4) selon l'une ou plusieurs des revendications précédentes.

15. Utilisation de l'arrangement (2, 4 ; 7, 4 ; 2, 7, 4) selon l'une ou plusieurs des revendications précédentes dans la réhabilitation des conduits de canalisation sans tranchée, dans laquelle ledit arrangement (2, 4 ; 2, 7 ; 2, 7, 4) est utilisée en tant que :

- arrangement dans lequel ladite feuille se présente sous la forme d'une feuille tubulaire intérieure (2), sachant que la face de feuille de la feuille tubulaire intérieure (2) faisant face à la résine (4) est disposée plus près de l'axe du conduit de canalisation et la résine appliquée (4) est disposée plus près de la paroi du conduit de canalisation, sachant que la feuille tubulaire intérieure (2) reste de préférence dans la canalisation (K) après le durcissement de la résine (4) et sachant que la feuille tubulaire intérieure (2) est avantageusement au moins partiellement perméable aux rayonnement ultraviolet ;
- arrangement dans lequel ladite feuille se présente sous la forme d'une feuille extérieure ou d'une feuille tubulaire extérieure qui, une fois mise en place, entoure la résine de l'extérieur, et dans lequel la feuille tubulaire extérieure absorbe et/ou réfléchit avantageusement le rayonnement UV ;
- arrangement dans lequel ladite feuille se présente sous la forme d'une feuille extérieure, en particulier une feuille extérieure intérieure (7), dans la forme d'une feuille plate, qui est enroulée en spirale autour de la résine (4) depuis l'extérieur et avec des zones de recouvrement (9) en zones de bordure, sachant que les zones de recouvrement (9) en zones de bordure de ladite feuille extérieure (7), en particulier intérieure, sont reliées par collage, en particulier par fusion de la couche extérieure éloignée de la résine (4), à une température comprise entre 50 °C et 130 °C, de préférence entre 65 °C et 100 °C et de manière particulièrement préférée, entre 65 °C et 90 °C, et sachant que les deux couches extérieures de la feuille extérieure (7), à savoir ladite couche extérieure fusible et la couche extérieure orientée vers la résine (4), sont reliées par liaison thermique, en particulier durant le durcissement exothermique de la résine (4) ;

- arrangement dans lequel ladite feuille se présente sous la forme d'une pré-gaine (10), c'est-à-dire d'une gaine coulissante, qui vient en appui sur la paroi du conduit de canalisation ;

- arrangement dans lequel ladite feuille se présente sous la forme d'une feuille coulissante, laquelle vient en appui dans la zone inférieure de la paroi du conduit de canalisation ;

- tuyau de calibrage ; et/ou

- arrangement dans lequel ladite feuille se présente sous la forme d'une feuille de protection, qui est en contact direct avec la couche de résine d'une gaine de chemisage de tuyaux.

16. Utilisation de l'arrangement selon l'une ou plusieurs des revendications précédentes pour l'utilisation dans des applications aux plastiques renforcés aux fibres de verre, dans la construction navale, dans la construction aéronautique, dans le secteur des préimprégnés (fibres préimprégnées), dans la fabrication de stratifiés avec des résines durcissables, pour le revêtement intérieur et extérieur de récipients et de réservoirs formés en résines et matériaux supports et dans la finition de surface des résines.

Fig. 1

EP 2 835 395 B1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9911966 A1
- DE 102011105995 A1
- DE 102011002032 A1